(19) Europäisches Patentamt
European Patent Office
Office européen des brevets

(11) EP 2 324 904 B1

(12) **EUROPEAN PATENT SPECIFICATION**

(45) Date of publication and mention
of the grant of the patent:
**25.05.2016 Bulletin 2016/21**

(51) Int Cl.:
**B01D 53/94** (2006.01)

(21) Application number: **10251926.1**

(22) Date of filing: **12.11.2010**

(54) **Catalyst-carrying filter and exhaust gas purification system**

Katalysatorträgerfilter und Abgasreinigungssystem

Filtre de support de catalyseur et système de purification de gaz d'échappement

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2009 JP 2009262642**

(43) Date of publication of application:
**25.05.2011 Bulletin 2011/21**

(73) Proprietor: **NGK Insulators, Ltd.**
**Nagoya-City, Aichi Pref. 467-8530 (JP)**

(72) Inventor: **Yamaguchi, Shinji**
**Nagoya City**
**Aichi-ken, 467-8530 (JP)**

(74) Representative: **Naylor, Matthew John et al**
**Mewburn Ellis LLP**
**City Tower**
**40 Basinghall Street**
**London EC2V 5DE (GB)**

(56) References cited:
EP-A1- 0 736 503          EP-A1- 1 398 081
EP-A1- 1 961 933          WO-A1-2012/030533
DE-A1-102007 039 249      JP-A- 2005 248 726

**Description**

Background of the Invention and Related Art Statement

The present invention relates to a catalyst-carrying filter and to a diesel engine having an exhaust gas purification system. In more detail, the present invention relates to a catalyst-carrying filter used for trapping or purifying particulates contained in exhaust gas discharged from an internal combustion engine of a diesel engine or the like or various burning apparatuses and to a diesel engine having an exhaust gas purification system.

In exhaust gas discharged from an internal combustion engine of a diesel engine or the like or various combustion apparatus (hereinbelow suitably referred to as an "internal combustion engine or the like"), a large amount of particulate matter (hereinbelow, suitably referred to as "particulate matter", "particulates", or "PM") mainly containing soot (graphite) is contained. If the particulate matter is released into the atmosphere, environmental pollution is caused. Therefore, it is general that a filter for trapping particulate matter is mounted in an exhaust gas flow passage from the internal combustion engine or the like.

As a filter used for such a purpose, there is, for example, a honeycomb filter having a honeycomb structure substrate where a plurality of cells functioning as exhaust gas fluid passages are separated and formed by partition walls of porous ceramic having a large number of pores and being alternately plugged in one side open end portions and the other side open end portions of the cells with plugging portions (see, e.g., JP-A-2006-255539, JP-A-2005-248726, and JP-A-2008-188511).

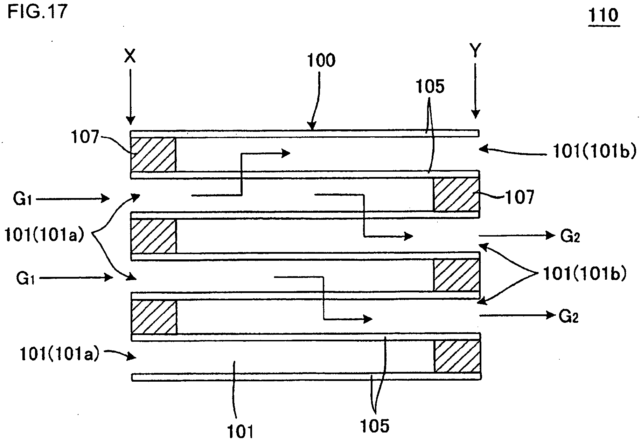

For example, a honeycomb filter 110 shown in Fig. 17 is provided with a honeycomb structure 100 having a plurality of cells 101 separated and formed by partition walls 105 of porous ceramic having a large number of pores, and one side open end portions X and the other side end portions Y of the cells 101 are alternately plugged with plugging portions 107. Such a honeycomb filter 110 is constituted in such a manner that, when gas $G_1$ flows therein from the cells 101a having open end portions X on one side, the gas passes through the partition walls 105 from the surfaces of the partition walls 105 separating and forming the cells 101a and that gas $G_2$ flows out from the cells 101b having open end portions Y on the other side. That is, the gas $G_1$ flowing into the cells 101a flows into the cells 101b via pores formed in the partition walls 105 and is discharged from the end portions Y on the other side of the honeycomb filter 110. In addition, when the exhaust gas (gas $G_1$) passes through the partition walls as described above, the particulate matter in the exhaust gas is trapped by the partition walls to purify the gas.

In addition, in recent years, the regulations against harmful substances in automobile exhaust gas have been strengthened on a global basis. Against such a background, as an exhaust gas treatment technique, besides the aforementioned honeycomb filter (e.g., diesel particulate filter (hereinbelow referred to also a "DPF")), development of a three-way catalyst, a diesel oxidation catalyst (DOC), urea selection type catalyzed reduction (urea SCR), a NOx adsorber reducing catalyst (LNT) and the like is proceeding (e.g., JP-A-2006-255539, JP-A-2005-248726, and JP-A-2008-188511). For example, a recent diesel engine automobile exhaust gas purification apparatus is exemplified by an apparatus constituted of a DOC, a DPF with a catalyst, and a urea SCR from the exhaust gas upstream side.

The JP-A-2006-255539 discloses an exhaust gas purification apparatus having an HC addition means for adding liquid HC in exhaust gas; the first catalyst having a carrier substrate and a catalyst layer formed on the carrier substrate and containing an HC adsorber, a solid superacid, and a noble metal, and disposed on the exhaust gas downstream side of the HC addition means; and the second catalyst having a carrier substrate and a catalyst layer formed on the carrier substrate and containing a noble metal and a NOx adsorber and disposed on the exhaust gas downstream side of the first catalyst.

In addition, the JP-A-2005-248726 discloses an exhaust gas purification filter which is a wall-flow structured filter catalyst having inflow side cells plugged on the exhaust gas downstream side and outflow side cells adjacent to the inflow side cells and plugged on the exhaust gas upstream side, porous cell partition walls separating the inflow side cells and the outflow side cells and having a large number of pores, and a catalyst layer formed on the surfaces of the cell partition walls and the internal surfaces of the pores and obtained by loading a catalyst metal on a porous oxide; where, in the catalyst layer formed on the surfaces of the cell partition walls exposed to the outflow side cells, the peak value of macropore size measured by mercury porosimetry is larger than 0.2 $\mu$m and not larger than 2.0 $\mu$m, and a NO$_x$ adsorber is loaded together with the metal.

Further, the JP-A-2008-188511 discloses an exhaust gas purification filter which is a wall-flow type filter purifying particulate matter in exhaust gas; where, in the porous walls constituting exhaust gas passages of the filter, the first catalyst containing a composite metal oxide of copper and vanadium, a sulfate of an alkali metal and/or a sulfate of an alkali earth metal is loaded on the porous walls on the exhaust gas inflow passage side, and the second catalyst containing a noble metal and an inorganic oxide on the porous walls on the exhaust gas outflow passage side.

According to the future strengthening of exhaust gas regulations, as a system where catalysts having different purification functions are disposed in series from the exhaust gas upstream side as in the aforementioned JP-A-2006-255539 to further add a DPF for trapping PM, there can be considered an exhaust gas treatment system where a DOC, a DPF with a catalyst, a urea SCR, a preventing ammonia slip catalyst (ASC), and the like are disposed. However, in such a system, the treatment system becomes too large (i.e., too long in the exhaust gas flow direction), thereby causing a problem of impossible securement of a space capable of mounting such an exhaust gas treatment system. Even if it can be mounted, it costs much, and the exhaust gas treatment system becomes heavy, which causes problems of necessity of a firm attachment structure for a vibration countermeasure, increase in vehicle weight, increase in exhaust gas resistance (pressure loss), and deterioration in gas mileage.

In addition, for example, there has been proposed an exhaust gas purification filter catalyst where, in the catalyst layer formed on the surface of the cell partition walls exposed to the outflow side cells, the peak value of macropore size measured by mercury porosimetry is larger than 0.2 $\mu$m and not larger than 2.0 $\mu$m, and a $NO_x$ adsorber is loaded together with a metal as in JP-A-2005-248726. In the catalyst, by the macropore in the range of not deteriorating the trapping performance, the $NO_x$ adsorbing performance and sulfur tolerance are improved.

In addition, for example, there has been proposed loading of a catalyst having high PM combustion activity on the partition wall surfaces on exhaust gas inflow passage side and loading of catalyst for purifying harmful gas components on the partition wall surfaces on the exhaust gas outflow passage side as in the JP-A-2008-188511.

However, any of the JP-A-2005-248726 and the JP-A-2008-188511 has a large catalyst load amount in the case of loading a catalyst for purifying $NO_x$, and loading of the catalyst inside the pores of the partition walls causes clogging of the pores. In addition, in the case of loading the catalyst on the surfaces of the partition walls as a porous body for transmitting gas, the cells functioning as the exhaust gas flow passages become narrow, thereby causing a problem of extreme increase in pressure loss. In particular, in the case of expecting the PM-trapping function from the catalyst layer on the outflow side as in the JP-2005-248726, since exhaust gas temperature is low, clogging of pores functioning as exhaust gas flow passages with soot remarkably increases pressure loss in the region where PM is not combusted.

Further, soot is easily trapped in the partition walls of the DPF, and rise in pressure loss is remarkable from the initial stage of soot deposition, and the PM brought in contact with the catalyst loaded on the surfaces of the partition walls or inside the pores of the partition walls and accelerating PM combustion is combusted quickly in comparison with the PM which is not in contact with the catalyst upon natural regeneration during driving. Therefore, there is caused a phenomenon of the pressure loss value with respect to the soot deposition amount becoming low in comparison with the pressure loss value with respect to the soot deposition amount without regeneration (hereinbelow, such a phenomenon may be referred to as "pressure loss hysteresis"). When the difference (pressure loss hysteresis) is large, estimation of the PM deposition amount due to pressure loss is difficult. Therefore, there is a problem of deterioration in controllability (hereinbelow sometimes referred to as "regeneration controllability") upon regeneration of the DPF.

In addition, when a catalyst is loaded on the partition walls of the DPF, to gain the surface area, a wash coat layer of a porous composite oxide such as alumina or the like is used. However, shrinkage is caused in a loading step such as drying or the like, thereby causing a large number of cracks in the catalyst layer itself. This is particularly remarkable in a catalyst having a $NO_x$ purification function because of the large load amount. In addition, by the thermal history or vibrations during the use, a new crack may be caused. Therefore, it is extremely difficult to impart the PM-trapping function to the catalyst layer itself.

EP A 1398081 shows a catalytic honeycomb filter having inflow cells plugged at the outlet ends and outflow cells plugged at the inlet ends, separated by porous walls. A catalyst layer is formed on the cell walls and on the inside surface of the pores in the walls, and has a first catalyst support of porous oxide with an average particle diameter of 1 $\mu$m or less and a second catalyst support consisting of the porous oxide with an average particle diameter within a range from 1/20 to 1/2 of the average pore diameter of the walls.

EP A 1961933 shows a catalytically active diesel particulate filter also having inflow cells plugged at the outlet ends and outflow cells plugged at the inlet ends, separated by porous walls. Catalytic coatings are present on the surfaces of the walls or within the walls.

Summary of the Invention

The present invention has been made in view of the problems of prior art as described above and aims to provide a catalyst-carrying filter capable of successfully trapping particulate matter in exhaust gas and purifying harmful components (in particular, $NO_x$) in exhaust gas, capable of effectively inhibiting excessive rise of pressure loss, and capable of having a compact constitution excellent in regeneration controllability, and an exhaust gas purification system provided with the catalyst-carrying filter.

According to the present invention, there is provided the catalyst-carrying filter set out in claim 1.

Preferred optional features of the invention are set out in claims 2 to 15.

The invention also provides a diesel engine having an exhaust gas purification system as set out in claim 16.

A catalyst-carrying filter of the invention and an exhaust gas purification system used in the present invention can successfully trap particulate matter in exhaust gas and purify harmful components (in particular, $NO_x$) in exhaust

gas, effectively inhibit excessive rise of pressure loss, are excellent in regeneration controllability and have a compact constitution.

More specifically, a catalyst-carrying filter of the present invention can inhibit PM from entering the internal portion of the pores of the partition walls by the region where microparticles adhere and fix to the internal portions of the pores of the partition wall substrate and by the PM-trapping layer (if provided) and the effect of inhibiting rise of pressure loss after deposition of PM can be obtained. In addition, pressure loss hysteresis can be suppressed.

Further, on the side where outflow cells are separated and formed of the partition walls, a gas purification catalyst layer where a catalyst purifying at least $NO_x$ is carried is formed. PM in the exhaust gas is trapped and removed by the PM-trapping layer, and gas containing little PM passes through the gas purification catalyst layer. Therefore, contact hindrance between the gas and the catalyst by the PM deposition is hardly caused, and there is no fear of causing a remarkable rise of pressure loss due to PM deposition in the gas purification catalyst layer where a catalyst purifying $NO_x$ is loaded. In addition, in comparison with a case of loading a catalyst purifying $NO_x$ on the side where the inflow side cells are separated and formed of the partition walls, cell clogging by ash deposition during the use and contact hindrance between the gas and the catalyst are hardly caused, and performance deterioration of the catalyst can effectively be inhibited.

In addition, in comparison with a case of loading the aforementioned catalyst purifying $NO_x$ on the entire honeycomb structure, an amount of catalyst loaded can be reduced, and rise in pressure loss can be inhibited for the reduced catalyst amount.

In addition, since the PM-trapping layer is formed directly on the partition walls, even in the case that a crack generates in the gas purification catalyst layer, it has excellent PM-trapping performance. In particular, even in the case that a regulation on the number of particulates ($6 \times 10^{11}$ particulates/km level) is introduced, the trapping performance can be maintained for a long period of time, and the regulation can be cleared.

In addition, since PM trapping and $NO_x$ purification can be performed in one catalyst-carrying filter, the constitution can extremely be compact in comparison with a conventional exhaust gas purification system where a plurality of filters are disposed in series.

Brief Description of the Drawings

[Fig. 1] Fig. 1 is a perspective view schematically showing an embodiment of a catalyst-carrying filter of the present invention.

[Fig. 2] Fig. 2 is a plan view showing an end face of the catalyst-carrying filter shown in Fig. 1.

[Fig. 3] Fig. 3 is a cross-sectional view schematically showing a cross section of the catalyst-carrying filter shown in Fig. 1.

[Fig. 4] Fig. 4 is an enlarged cross-sectional view showing a part (portion shown by P) of a partition wall of the catalyst-carrying filter in Fig. 3.

[Fig. 5A] Fig. 5A is an explanatory view schematically showing a state where PM is trapped by a catalyst-carrying filter (not within the scope of the present invention).

[Fig. 5B] Fig. 5B is an explanatory view schematically showing a state where PM is trapped by a catalyst-carrying filter of the present invention.

[Fig. 6A] Fig. 6A is an explanatory view schematically showing a state where PM is trapped by partition walls of a conventional honeycomb filter.

[Fig. 6B] Fig. 6B is an explanatory view schematically showing a state where ash is deposited in cells of a conventional honeycomb filter to clog cells.

[Fig. 7] Fig. 7 is a cross-sectional view schematically showing a method for obtaining a thickness of a PM-trapping layer.

[Fig. 8] Fig. 8 is a cross-sectional view showing an enlarged part of a partition wall of another catalyst-carrying filter of (not within the scope of the present invention).

[Fig. 9] Fig. 9 is a cross-sectional view showing an enlarged part of a partition wall of still another embodiment of a catalyst-carrying filter of the present invention.

[Fig. 10] Fig. 10 is a cross-sectional view showing an enlarged part of a partition wall of still another catalyst-carrying filter (not within the scope of the present invention).

[Fig. 11] Fig. 11 is a cross-sectional view showing an enlarged part of a partition wall of still another catalyst-carrying filter (not within the scope of the present invention).

[Fig. 12] Fig. 12 is a perspective view schematically showing a honeycomb structure applied to another embodiment of a catalyst-carrying filter of the present invention.

[Fig. 13] Fig. 13 is an explanatory view schematically showing an embodiment of an exhaust gas purification system used in the present invention and cross-sectional view where a part is cut off of the exhaust gas purification system.
[Fig. 14] Fig. 14 is a graph showing a relation between the PM deposition amount and the pressure loss and used for calculation of pressure loss hysteresis.
[Fig. 15A] Fig. 15A is a graph showing an example of an evaluation result of the pressure loss hysteresis.
[Fig. 15B] Fig. 15B is a graph showing another example of an evaluation result of the pressure loss hysteresis.
[Fig. 16] Fig. 16 is a micrograph of a cross section of the PM-trapping layer of Example 1.
[Fig. 17] Fig. 17 is a cross-sectional view schematically showing constitution of a conventional honeycomb filter.

Reference Numerals

1, 1A, 1B, 1C, 1D: catalyst-carrying filter, 2, 2A: honeycomb structure, 3: cell, 3a: inflow cell, 3b: outflow cell, 3X: inflow side open end portion, 3Y: outflow side open end portion, 4: partition wall, 4a: partition wall substrate, 5: pore (pore of partition wall substrate), 5a: pore (pore formed on the inflow cell side of the partition wall substrate), 5b: pore (pore formed on the outflow cell side of the partition wall substrate), 13: plugging portion, 20: microparticles, 20a: PM-trapping layer, 21: microparticles, 21x: region where microparticles adhere and fix, 22: catalyst, 23: gas purification catalyst layer, 24: preventing ammonia slip catalyst layer, 25: oxidation catalyst, 30: PM (particulate matter), 50: exhaust gas purification system, 51: exhaust gas flow passage, 52: reducing agent supply portion, 53: diesel oxidation catalyst (DOC), 54: can for canning, 55: mat, 62: honeycomb segment, 63: bonded honeycomb segment assembly, 64: bonding material, 66: outer coat layer, 100: honeycomb structure, 101a, 101b: cell, 105: partition wall, 107: plugging portion, 110: (conventional) honeycomb filter, 201: honeycomb structure, 203: cell, 204: partition wall, 205: pore, 210: PM (particulate matter), 211: ash, 220: region where the catalyst is not utilized, $G_1$: (untreated) exhaust gas, $G_2$: (treated) exhaust gas, X: open end portion on one side, Y: open end portion on the other side

Detailed Description of the Invention

Hereinbelow, modes for carrying out a catalyst-carrying filter of the present invention and an exhaust gas purification system used in the present invention will be described specifically by way of example.

[1] Catalyst-carrying filter of the present invention:

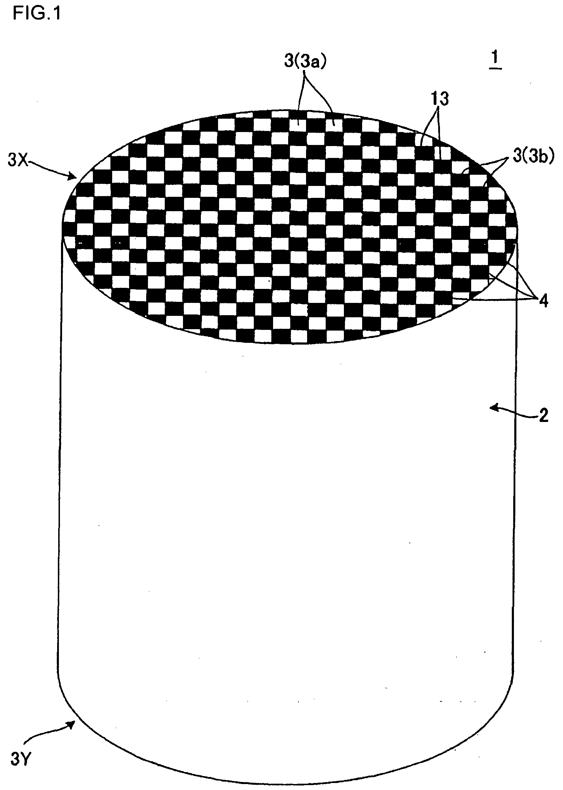

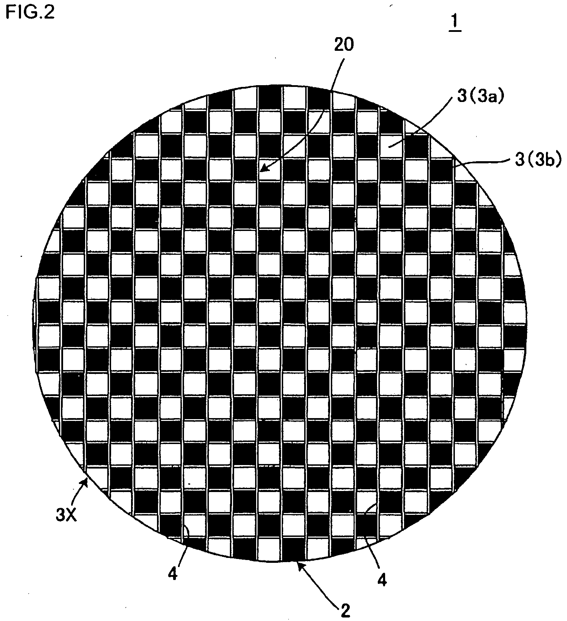

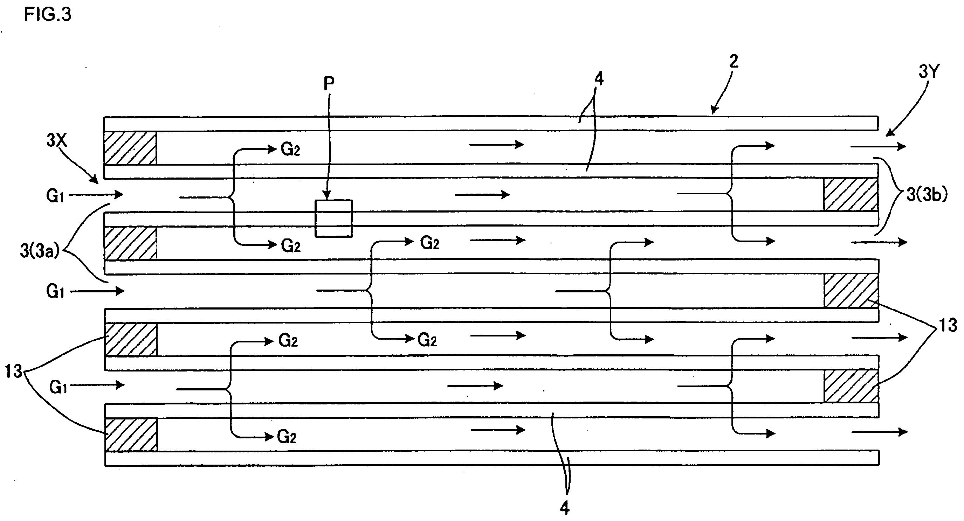

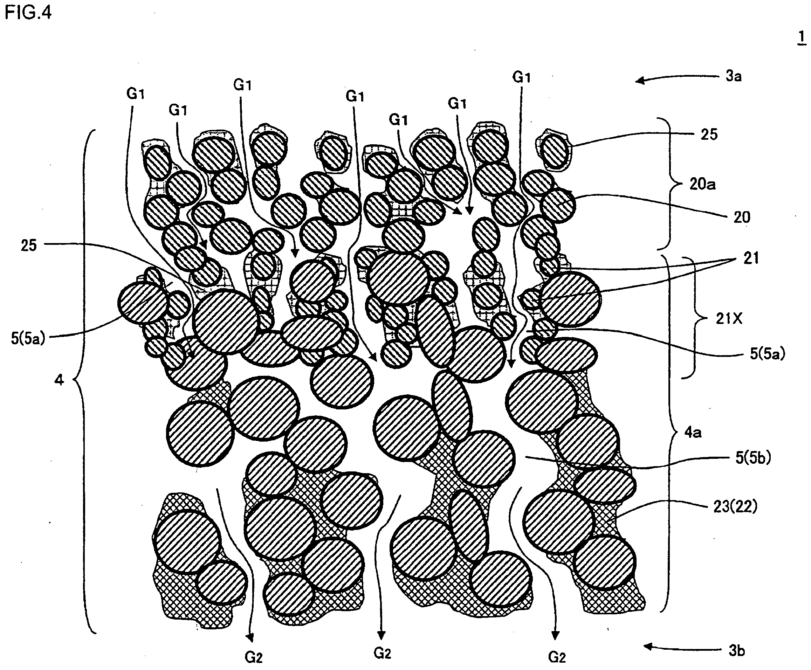

Here, Fig. 1 is a perspective view schematically showing an embodiment of a catalyst-carrying filter of the present invention, Fig. 2 is a plan view showing an end face of the catalyst-carrying filter shown in Fig. 1, and Fig. 3 is a cross-sectional view schematically showing a cross section of the catalyst-carrying filter shown in Fig. 1. Fig. 4 is an enlarged cross-sectional view showing a part (portion shown by P) of a partition wall of the catalyst-carrying filter in Fig. 3. Incidentally, Fig. 3 is a cross-sectional view along the central axis (i.e. , cell extension direction) of the catalyst-carrying filter. In addition, in Figs. 3 and 4, the arrows shown by $G_1$ and $G_2$ show exhaust gas movement directions at the time the exhaust gas passes through a catalyst-carrying filter.

As shown in Figs. 1 to 4, a catalyst-carrying filter 1 of the present invention has a honeycomb structure 2 having porous partition walls 4 having a large number of pores 5 and separating and forming a plurality of cells 3 functioning as exhaust gas flow passages by the partition walls 4 and plugging portions 13 alternately plugging exhaust gas inflow side open end portions 3X and exhaust gas outflow side open end portions 3Y of the cells 3.

In the catalyst-carrying filter 1 of the present embodiment, the cells 3 are constituted of inflow cells 3a which are open in the inflow side open end portion 3X and outflow cells 3b which are open in the outflow side open end portion 3Y. In this embodiment, the partition walls 4 are constituted of a porous partition wall substrate 4a having a large number of pores 5, a PM-trapping layer 20a of microparticles 20 depositing and fixing on an inflow cell side surface of the partition wall substrate 4a on a side of separating and forming the inflow cells 3a, and microparticles 21 adhering and fixing to the internal portions of the pores 5a in the range of predetermined partition wall thickness from the inflow cell side surface (i.e., pores 5a formed on the inflow cell side of the partition wall substrate 4a). The average pore size of the PM-trapping layer 20a and an average pore size in the region 21x where the microparticles 21 adhere and fix to the internal portions of the pores 5a of the partition wall substrate 4a are smaller than the average pore size of the partition wall substrate 4a (i.e., average pore size in the region where the aforementioned microparticles 21 do not adhere), and a gas purification catalyst layer 23 where a catalyst 22 purifying at least $NO_x$ is loaded on at least one of an outflow cell side surface of the partition wall substrate 4a on a side of separating and forming the outflow cells 3b and internal portions of the pores 5b in the range of predetermined partition wall thickness from the outflow cell side surface (i.e., pores 5b formed on outflow cell side of the partition wall substrate 4a) is formed.

Incidentally, Fig. 4 shows an example of the case where the PM-trapping layer 20a is formed on the inflow cell side surface of the partition wall substrate 4a and where the microparticles 21 adhere to the internal portions of the pores 5a of the partition wall substrate 4a.

By such a constitution, trapping of particulate matter in exhaust gas and purification of harmful components (in particular, NOₓ) can be performed successfully, excessive rise of pressure loss can effectively be inhibited, and a compact constitution excellent in regeneration controllability can be obtained.

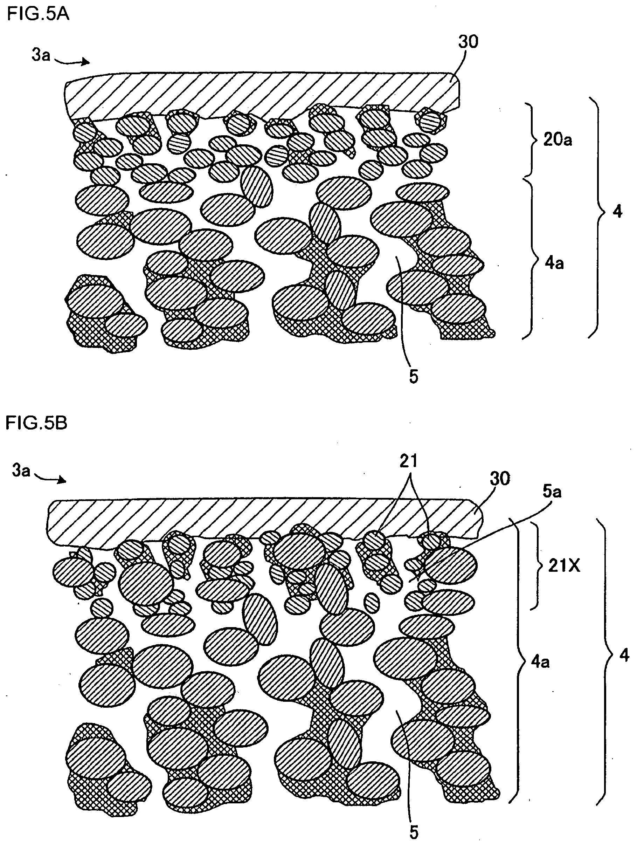

As shown in Fig. 5A, in the case that a PM-trapping layer 20a is formed on the inflow cell side surface of the partition wall substrate 4a on the side where the inflow cells 3a are separated and formed, the PM 30 can be inhibited from entering the internal portions of the pores 5 of the partition wall substrate 4a by the PM-trapping layer 20a, and therefore the effect in inhibiting rise of pressure loss after PM deposition can be obtained. That is, since the average pore size of the PM-trapping layer 20a is smaller than the average pore size of the partition wall substrate 4a, most of the PM contained in the exhaust gas deposits in a cake layer shape on the PM-trapping layer 20a, and the PM can be remarkably inhibited from entering the internal portions of the pores 5 of the partition wall substrate 4a. This structure of Fig. 5A is not within the scope of the invention.

In addition, as shown in Fig. 5B, in the case that microparticles 21 adhere and fix to the internal portions of the pores 5a in the range from the inflow cell side surface to the predetermined partition wall thickness of the partition wall substrate 4a, the PM 30 can be inhibited from entering the internal portions of the pores of the portion following the region 21x where the microparticles 21 adhere and fix (e.g., pores 5b formed on the outflow cell side of the partition wall substrate 4a) by the aforementioned region 21x, and the effect in inhibiting the rise of pressure loss after PM deposition can be obtained. That is, since the average pore size in the region 21x where the microparticles 21 adhere and fix of the partition wall substrate 4a is smaller than the average pore size of the partition wall substrate 4a, most of the PM contained in exhaust gas deposits in a cake layer shape on the partition wall substrate 4a and inhibited from entering the pores 5 of the partition wall substrate 4a, in particular, the portion following the region 21x where the microparticles 21 adhere and fix of the partition wall substrate 4a.

Here, Figs. 5A and 5B are explanatory views each schematically showing a state where PM is trapped by a catalyst-carrying filter with showing a cross section of a partition wall.

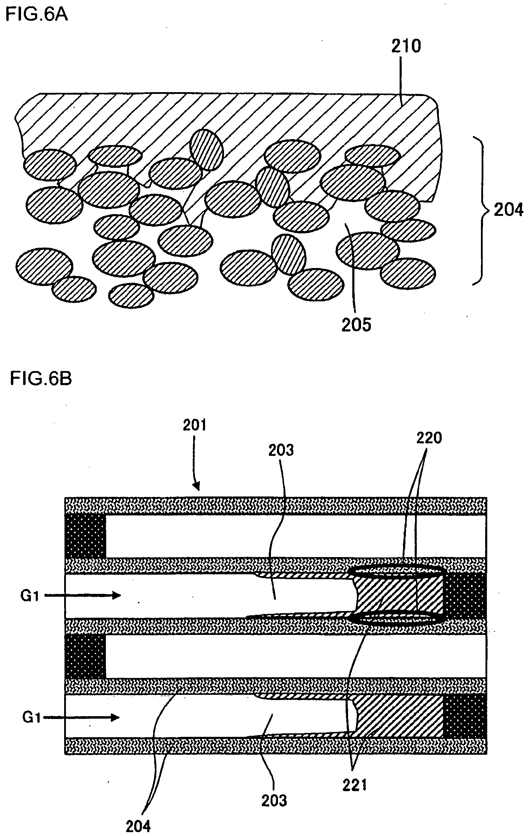

Incidentally, for example, in the case that the aforementioned PM-trapping layer is not formed on the partition wall substrate, as shown in Fig. 6A, PM 210 enters the pores 205, whose average pore size is large in comparison with that of the PM-trapping layer, of the partition walls 204. Since the pores formed in the partition walls function as flow passages when exhaust gas passes through the partition walls, clogging of the partition walls with soot (graphite), ash, and the like causes sharp increase in pressure loss of the honeycomb structure (more specifically, catalyst-carrying filter). Therefore, in a filter having only a honeycomb structure with no PM-trapping layer, in addition to the rise in pressure loss due to PM deposition on the partition walls in the initial stage of trapping the PM, pressure loss increases by the clogging of pores of the partition walls with PM, thereby extremely increasing the rise in pressure loss of the filter (hereinbelow, such rise in pressure loss is sometimes referred to as "initial pressure loss rise"). In particular, since the rise in pressure loss due to clogging of pores of the partition walls with PM is large in comparison with the rise in pressure loss due to deposition of PM on the partition walls, it has a great influence on the rise in pressure loss of the catalyst-carrying filter.

In addition, when a catalyst is loaded in the internal portions of the pores of the partition walls (partition wall substrate), since the pore capacity of the partition walls decreases according to the load amount, the porous partition walls have practically low porosity. In addition, when a porous catalyst layer is formed by loading a catalyst on the surface of the partition walls, the thickness of the partition walls is practically increased. By thus decreasing the porosity of the partition walls or increasing the thickness of the partition walls by the loading of a catalyst, pressure loss due to deposition of PM or ash in the pores of the partition walls remarkably increases. Generally, loading of a catalyst of about 25 g/L is preferable as a catalyst layer of an oxidation catalyst is preferable, and loading of a catalyst of about 150 g/L as a catalyst for purifying NOₓ is preferable. However, in the case of loading both of the catalysts on the partition walls of a DPF, pressure loss remarkably increases. Incidentally, a catalyst load amount (g/L) in the present specification shows the amount (g) of the catalyst loaded per honeycomb structure unit volume (L).

Since the partition walls of a honeycomb structure constituting the catalyst-carrying filter of the present embodiment are constituted of a porous partition wall substrate having a large number of pores, a PM-trapping layer (if provided) depositing and fixing on the inflow cell side surface of the partition wall substrate on the side of separating and forming inflow cells, and microparticles adhering and fixing to the internal portion in a range of a predetermined partition wall thickness from the inflow cell side surface, the PM is inhibited from entering the internal portions of the pores of the partition walls by the PM-trapping layer or the region where the microparticles is/are adhering and fixing, and the effect of inhibiting the pressure loss rise after the PM deposition. In addition, pressure loss hysteresis can be suppressed.

Further, on at least one of the outflow cell side surface of the partition wall substrate on the side of separating and forming the discharge cells and the internal portions of the pores in a range of a predetermined partition wall thickness from the inflow cell side surface, a gas purification catalyst layer where the catalyst for purifying at least NOₓ (hereinbelow sometimes referred to as a "NOₓ catalyst") is loaded. The PM in the exhaust gas is trapped and removed at the PM-trapping layer or the region where the microparticles adhere and fix, and the gas containing little PM passes through the gas purification catalyst layer. Therefore, contact hindrance between the gas and the catalyst due to PM deposition is hardly caused, and there is no fear of causing remarkable pressure loss rise by the deposition of the PM in the exhaust gas on the gas purification catalyst layer where the $NO_x$ catalyst is loaded. For example, as shown in Fig. 6B, when the ash 21 deposits in the internal portions of the cells 203 of the honeycomb structure 201, since the surfaces of the partition walls 204 are covered with the ash 211, the contact between the gas and the catalyst (e.g., the aforementioned $NO_x$ catalyst) is hindered, and the purification performance by the catalyst is remarkably lowered. Incidentally, the region shown by the reference numeral 220 in Fig. 6B is the region where a catalyst is not used when the ash 211 deposits.

Here, Fig. 6A is an explanatory view schematically showing a state that PM is trapped by a conventional honeycomb filter (cross-sectional view of the partition walls), and Fig. 6B is an explanatory view schematically showing the state that cells are clogged by ash depositing in the cells of a conventional honeycomb filter (cross-sectional view).

In a catalyst-carrying filter of the present embodiment, since cell clogging by deposition of.ash during use and contact hindrance between the gas and the catalyst are hardly caused in comparison with the case of carrying a catalyst purifying $NO_x$ on the side of separating and forming the inflow cells, deterioration in catalyst performance can effectively be inhibited. That is, since components deteriorating the $NO_x$ catalyst such as ash and sulfur component in exhaust gas is trapped by the PM-trapping layer or the region where the microparticles adhere and fix, deterioration of the catalyst constituting the gas purification catalyst layer is effectively inhibited. Incidentally, the PM-trapping layer and the region where the microparticles adhere and fix may together be referred to as "PM-trapping layer and the like".

In addition, in comparison with the case of loading the aforementioned catalyst purifying $NO_x$ on the entire honeycomb structure, it is not necessary to load a catalyst on the portion where gas does not flow effectively to be able to reduce the amount of the catalyst, thereby further inhibiting the pressure loss from rising.

In addition, by forming the PM-trapping layer directly on the partition wall substrate, even in the case that the case that a crack is caused in the gas purification catalyst layer, excellent PM trapping performance is exhibited. In particular, even in the case that a regulation on the number of particulates ($6 \times 10^{11}$ particulates/km level) is introduced, the trapping performance can be maintained for a long period of time, and the regulation can be cleared.

In addition, since PM trapping and $NO_x$ purification can be performed in one catalyst-carrying filter, the constitution can extremely be compact in comparison with a conventional exhaust gas purification system where a plurality of filters are disposed in series.

Incidentally, in a catalyst-carrying filter of the present embodiment, the average particle diameter of the microparticles constituting the PM-trapping layer and the microparticles adhering and fixing to the internal portions of the pores of the partition wall substrate is preferably smaller than the average pore size of the partition wall substrate. By such constitution, the average pore size of the PM-trapping layer and the average pore size in the region where the microparticles adhere and fix to the internal portions of the pores of the partition wall substrate can be made smaller than the average pore size of the partition wall substrate, thereby PM can be trapped successfully in the PM-trapping layer and in the region where microparticles adhere and fix the internal portions of the pores of the partition wall substrate.

The "microparticles" constituting the PM-trapping layer constitutes the porous PM-trapping layer having a large number of pores by depositing and fixing on the inflow cell side surface of the partition wall substrate, and examples of microparticles include minute particles of ceramic, glass, and the like. In addition, "microparticles" adhering and fixing to the internal portions of the pores of the partition wall substrate narrow the size of the pores of the partition wall substrate in the same manner by adhering and fixing to the internal portions of the pores of the partition wall substrates. Examples of the "microparticles" include the same microparticles as the "microparticles constituting the PM-trapping layer. Incidentally, in the present invention, the microparticle means a particle having a particle diameter of 50 $\mu$m or less, or a particle having a size of 1/3 or less of the particles constituting the partition wall substrate.

In addition, in a catalyst-carrying filter of the present embodiment, combustible substances such as soot in the PM depositing in the cake layer shape can be combusted and removed by further loading an oxidation catalyst on at least one of the surface of the partition wall substrate and the internal portions of the pores of the partition wall substrate. This enables filter regeneration by continuously or intermittently combusting and removing PM such as soot by an oxidation catalyst with inhibiting the initial pressure loss from rising by inhibiting the PM from entering into the partition walls. Incidentally, when an oxidation catalyst is loaded on the internal portions of the pores of the partition wall substrate, it is preferable to load the aforementioned oxidation catalyst in at least the region where the microparticles adhere and fix. In addition, by loading an oxidation catalyst on at least a part of the internal portions of the pores of the partition wall substrate, the PM passing through the PM-trapping layer and the region where the microparticles adhere and fix can be combusted and removed on a partition wall substrate.

In addition, in a catalyst-carrying filter of the present embodiment, an oxidation catalyst may be loaded on at least one of the surface of the PM-trapping layer and the internal portions of the pores of the PM-trapping layer. By such constitution, PM such as soot depositing on the PM-trapping layer can be combusted and removed more successively. Incidentally, such an oxidation catalyst may be loaded on both the partition wall substrate and the PM-trapping layer. Fig. 4 shows an example where an oxide catalyst 25 is loaded on both the partition wall substrate 4a and the PM-trapping layer 20a.

Further, in a catalyst-carrying filter of the present embodiment, a preventing ammonia slip catalyst layer having a preventing ammonia slip catalyst loaded thereon may further be formed on at least the outflow cell side surfaces of the partition wall substrate and the internal portions of the pores in the range of a predetermined partition wall thickness from the outflow cell side surface. A catalyst-carrying filter of the present embodiment purifies the exhaust gas by a $NO_x$ catalyst on the outflow cell side of the partition wall substrate. Such a $NO_x$ catalyst can be exemplified by a selective reduction type $NO_x$ catalyst. The selective reduction type $NO_x$ catalyst may need ammonia as a reducing agent for decomposing $NO_x$. In this case, on more upstream side of the exhaust system having a catalyst-carrying filter disposed therein, an ammonia aqueous solution or a urea aqueous solution generating ammonia by hydrolysis is supplied to purify exhaust gas with ammonia as the reducing agent. At this time, when the amount of ammonia added to the exhaust gas is superfluous, unreacted ammonia is discharged from the outflow end face side of the catalyst-carrying filter, and an apparatus for separately treating the ammonia is required. However, as described above, by constitution further having a preventing ammonia slip catalyst layer, even a treatment for ammonia can be performed in the catalyst-carrying filter.

Incidentally, in the case that the preventing ammonia slip catalyst is loaded on the internal portions of the pores of the partition wall substrate from the outflow cell side surface, the catalyst is preferably loaded in the range of a thickness of below 1/2 of the thickness of a portion of the partition wall substrate, the portion separating the cells.

In addition, the preventing ammonia slip catalyst layer is preferably formed partially in the range on the outflow end face side of a honeycomb structure. By such constitution, in the case that superfluous ammonia is introduced into the catalyst-carrying filter, ammonia can be decomposed on the outflow end face side, and ammonia can effectively be inhibited from being discharged from the outflow end face side of the catalyst-carrying filter.

Similarly, a catalyst-carrying filter of the present embodiment may further have an oxidation catalyst layer where an oxidation catalyst is loaded on at least a part of the surface of the gas purification catalyst layer. By such constitution, carbon monoxide and the like generated when PM is combusted can be purified. In particular, in the case that no oxidation catalyst is loaded on the PM-trapping layer or the like, since CO generation upon PM combustion may increase, it may be necessary to dispose another oxide catalyst in the latter part. However, by additionally disposing an oxide catalyst layer as described above, even the CO treatment can be performed in the catalyst-carrying filter. Incidentally, a catalyst having the same components as those of the aforementioned preventing ammonia slip catalyst may be used as such an oxidation catalyst as long as the purification function is satisfied.

Hereinbelow, each of the constituents of a catalyst-carrying filter of the present embodiment will be described more specifically.

[1-1] Honeycomb structure and plugging portion:

A honeycomb structure constituting the catalyst-carrying filter of the present embodiment has porous partition walls 4 having a large number of pores 5 as shown in Figs. 1 to 3, and a plurality of cells 3 functioning as exhaust gas flowpassages are separated and formed by the partition walls 4. In the honeycomb structure 2, an open end portion 3X on the inflow side and the open end portion 3Y on the outlet side 3Y are alternately plugged with the plugging portions 13, and the inflow cells 3a opening in the inflow side open end portions 3X and the outflow cells 3b opening in the outflow side open end portions 3Y are alternately disposed by means of the partition walls 4.

There is no particular limitation on the whole shape of the honeycomb structure. For example, besides the cylindrical shape shown in Figs. 1 and 2, an elliptic cylinder shape, a square pole shape, and a triangle pole shape may be employed.

In addition, as a shape of the cells formed in the honeycomb structure (cell shape in a cross section perpendicular to the cell formation direction), besides the square cell shown in Fig. 1, for example, a hexagonal cell, an octagonal cell, a triangular cell, and the like may be employed. However, the shape is not limited to such shapes, and known cell shapes are widely included.

In a honeycomb structure used for the catalyst-carrying filter of the present embodiment, different cell structures can be combined. By allowing a cell of mutually adjacent cells to have an octagonal shape and the other cell to have a square shape, one cell (i.e., octagonal cell) can be made larger than the other cell (i.e., square cell). In particular, in the case of using the honeycomb structure for an engine having a large amount of ash generation, by increasing the size of the cell on the gas inflow side (inflow cell), the rise of the pressure loss upon ash deposition can be inhibited. In addition, by increasing the size of cells on the exhaust gas outflow side (outflow cell), the $NO_x$ catalyst of a larger amount can be loaded. In particular, when the $NO_x$ catalyst of 200 g/L or more is loaded, the outflow cell is too thin (narrow), and the rise of the pressure loss may be increased. However, by increasing the size of the outflow cells, the rise of the pressure loss may be inhibited.

There is no particular limitation on the cell density of a honeycomb structure. When the honeycomb structure is used as a catalyst-carrying filter of the present embodiment, the density is preferably 0.9 to 233 cells/cm$^2$ (6 to 1500 cells/sq.in.), more preferably 15.5 to 62.0 cells/cm$^2$ (100 to 400 cells/sq.in.) in that the region for storing PM or ash can be secured in the inflow cells and that the rise of pressure loss can be inhibited even with loading a $NO_x$ catalyst on the outflow cells, and particularly preferably 23.3 to 45.0 cells/cm$^2$ (150 to 290 cells/sq.in.) from the viewpoint of the balance between the deposition of PM or ash and the amount of the $NO_x$ catalyst loaded.

A honeycomb structure has a porous partition wall substrate having a large number of pores as a constituent for constituting partition walls. The thickness of the partition wall substrate is preferably 20 to 2000 $\mu$m, more preferably 100 to 635 $\mu$m from the viewpoint of the balance between the strength and the pressure loss, and particularly preferably 200 to 500 $\mu$m in that a $NO_x$ catalyst can successfully be loaded. In order to load a $NO_x$ catalyst, more pores are necessary. However, since strength is lowered when there are many pores, it is particularly preferable to make the thickness of the partition wall substrate 200 $\mu$m or more. In addition, even if the $NO_x$ catalyst is loaded on the surface of the partition wall substrate, the rise of the pressure loss can be inhibited, and therefore it is particularly preferable that the thickness of the partition wall substrate is 500 $\mu$m or less.

Though there is no particular limitation on the material for the honeycomb structure, ceramic can suitably be used, and any of cordierite, silicon carbide, alumina, mullite, aluminum titanate, and silicon nitride is preferable from the viewpoints of strength, thermal resistance, corrosion resistance, and the like.

As the plugging portions disposed so as to plug the open portions of the cells, plugging portions constituted in the same manner as the plugging portions used in a known honeycomb filter can be used.

Incidentally, in a catalyst-carrying filter of the present embodiment, a depression may be formed by the use of the sink mark due to shrinkage upon plugging inside the plugging portion for plugging a cell. When a $NO_x$ catalyst is loaded, because of the large amount of the catalyst, a cell may be clogged with a pool of the catalyst in a deep portion of the cell. However, when a depression is formed inside the plugging portion, the pool of the catalyst is absorbed by the depression to inhibit the cell from being clogged. In particular, when a catalyst of 100 g/L or more is loaded, the depression inside the plugging portion is effective. The depth of the depression is preferably at least the thickness of the wall of the partition wall substrate.

The average pore size of the partition wall substrate is preferably 0.3 to 150 $\mu$m because a large average pore size of the partition wall substrate makes the formation of the PM-trapping layer difficult and because a small average pore size makes the loading of the catalyst difficult. In order to secure a trapping efficiency of 90% or more by loading 60 g/L or more of the $NO_x$ catalyst, the average pore size is more preferably 1 to 60 $\mu$m. In particular, to form a uniform PM-trapping layer in order to respond to the particulate number regulation, the average pore size is particularly preferably 3 to 30 $\mu$m.

In addition, the porosity of the partition wall substrate is preferably 30 to 70%, more preferably 35 to 60%. When the porosity of the partition wall substrate is below 30%, there may be caused a problem of increase in pressure loss. In addition, when the porosity is above 70%, since strength of the partition walls including a gas purification layer becomes insufficient, and therefore, there may be caused a problem of exfoliation of the PM-trapping layer from the surface of the partition wall substrate, which is not preferable. Incidentally, in the aforementioned porosity range, as the porosity of the partition wall substrate becomes large, a more amount of catalyst can be loaded in a state that the rise of the pressure loss is inhibited, which is preferable. The aforementioned porosity of the partition wall substrate shows a porosity of the partition wall substrate before microparticles adhere and before the catalyst is loaded.

Such a partition wall substrate can be obtained by mixing, for example, an organic binder (hydroxypropoxylmethyl cellulose, methyl cellulose, etc.), a pore former (graphite, starch, synthetic resin, etc.), a surfactant (ethylene glycol, fatty acid soap, etc.), and the like together as desired besides framework particles of ceramics and water; kneading them to prepare kneaded clay; forming the kneaded clay into a desired shape; drying the kneaded clay to obtain a formed article; and firing the formed article. Incidentally, it is preferable that the average particle diameter of the aforementioned framework particles is larger than that of the microparticles constituting the PM-trapping layer and the like.

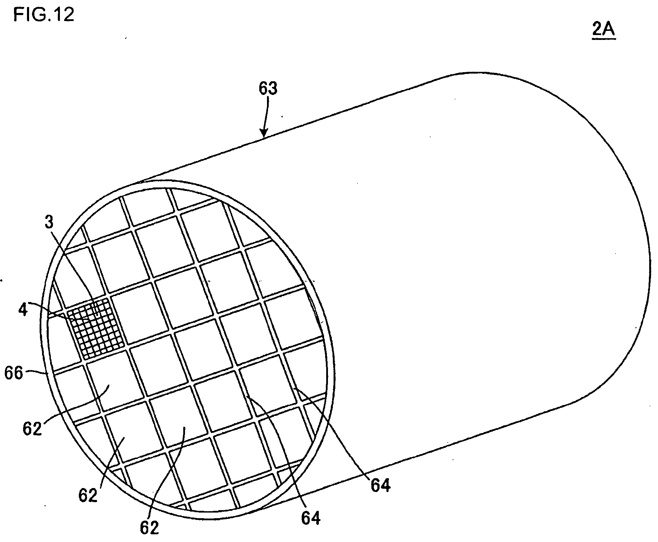

As a method for manufacturing a honeycomb structure of a partition wall substrate (that is, a honeycomb structure before microparticles adhere), in the case that, as shown in Fig. 12, a honeycomb structure 2A is constituted of a bonded honeycomb segment article 63 composed of a plurality of honeycomb segments 62, which are bonded to one another with a bonding material 64, with the outer peripheral face being cut to have a desired shape, the following manufacturing method can be employed as an example. However, the manufacturing method of the honeycomb structure is not limited to the following manufacturing method, and, for example, a known method for manufacturing a honeycomb structure can be employed. Here, Fig. 12 is a perspective view schematically showing a honeycomb structure applied to another embodiment of a catalyst-carrying filter of the present invention. Incidentally, the reference numeral 66 in Fig. 12 shows an outer peripheral coat layer.

In the first place, as a raw material for a honeycomb segment, for example, a SiC powder and a metal Si power are mixed together at a mass ratio of 80 : 20; methyl cellulose, hydroxypropoxylmethyl cellulose, a surfactant, and water are added to the mixture; and they are kneaded to obtain kneaded clay having plasticity. Next, the kneaded clay is subjected to extrusion forming by the use of a predetermined die to obtain a honeycomb segment formed article having a desired shape. Next, the honeycomb segment formed article is dried by a microwave drier and completely dried by a hot air drier.

Next, the plugging portions are formed by plugging the opening portions of predetermined cells with slurry for forming the plugging portions. Then, the honeycomb segment formed article having plugging portions formed therein is fired (calcined).

The calcination is performed for the purpose of degreasing. For example, the calcination is performed at 550°C for about 3 hours in an oxidation atmosphere. However, the calcination is not limited to this and is preferably performed according to organic matter (organic binder, dispersant, pore former, and the like) in the honeycomb formed article. Generally, since the combustion temperature of an organic binder is about 100 to 300°C, and the combustion temperature of a pore former is about 200 to 800°C, the calcination temperature may be about 200 to 1000°C. Though the calcination time is not particularly limited, it is generally about 3 to 100 hours.

Further, firing (main firing) is performed. The "main firing" means an operation for sintering the forming raw material during the calcination for densification, thereby securing predetermined strength. Since the firing conditions (temperature and time) differ depending on the kind of the forming rawmaterial, suitable conditions should be selected according to the kind. For example, firing temperature in the case of firing in an Ar inert atmosphere is generally about 1400°C to 1500°C. However, the firing temperature is not limited to the temperature.

As described above, a honeycomb structure can be manufactured. Incidentally, in the aforementioned manufacturing method, an example where, after forming plugging portions for plugging open portions of cells, the calcination and the main firing were performed to obtain a honeycomb structure. However, the plugging portions may be formed after the honeycomb segment formed article is fired. Incidentally, as a method for forming the plugging portions, there may be employed a method where a mask is disposed on the open portions on one side of predetermined cells, and plugging slurry is filled into the opening portions of the other cells. Incidentally, such a method for forming plugging portions can be performed according to a method for forming plugging portions in a known honeycomb filter.

Incidentally, as plugging portions, when the same material as the aforementioned honeycomb segment raw material is used, an expansion rate upon firing can be made the same as that of the honeycomb segment, which preferably leads to improvement in durability.

In addition, in the aforementioned manufacturing method, an example in the case where the honeycomb structure is manufactured by a bonded honeycomb segment article composed of a plurality of honeycomb segments. However, for example, a honeycomb structure may be formed unitarily by extrusion forming (integration forming). In the case of the integration forming of the honeycomb structure, there may suitably be employed a method where kneaded clay prepared as described above is subjected to extrusion forming by the use of a die having desired cell shape, partition wall thickness, and cell density; and the like.

In addition, in the aforementioned manufacturing method, an example of the case where a SiC powder and a metal Si powder is used. For example, when a honeycomb structure is manufactured with cordierite, kneaded clay can be prepared by adding a dispersion medium such as water and a pore former to a cordierite raw material, and further adding an organic binder and a dispersant, followed by kneading. When a formed article obtained by subjecting kneaded clay using a cordierite raw material to extrusion forming is fired, firing at 1410 to 1440°C for about 3 to 10 hours is preferable.

[1-2] PM-trapping layer and microparticles adhering and fixing to the internal portions of the pores:

In the catalyst-carrying filter of the present embodiment, as shown in Fig. 4, the partition walls 4 constituting the honeycomb structure is constituted of a porous partition wall substrate 4a having a large number of pores 5, a PM-trapping layer 20a (if provided) of microparticles 20 deposited and fixed on the inflow cell side surface of the partition wall substrate 4a on the side of separating and forming the inflow cells 3a, and microparticles 21 adhering and fixing to the internal portions of the pores 5a in the range of a predetermined partition wall thickness from the inflow cell side surface, and the average pore size of the PM-trapping layer 20a and the average pore size in the region 21x where the aforementioned microparticles 21 adhere and fix to the internal portions of the pores 5a of the partition wall substrate 4a is smaller than the average pore size of the partition wall substrate 4a. Therefore, particulate matter (PM) mainly containing soot (graphite) of exhaust gas is trapped by the aforementioned PM-trapping layer or the like, which plays a role of inhibiting PM from entering the internal portions of the pores of the partition walls. In other words, before the soot enters the pores of the partition walls, PM is trapped by the PM-trapping layer and the like, and thereby the rise of pressure loss of the catalyst-carrying filter is sufficiently inhibited.

Inaddition, in the catalyst-carrying filter of the present embodiment, PM in exhaust gas is trapped in a PM-trapping layer (if provided) and a region where the microparticles adhere and fix to the internal portions of the pores of the partition wall substrate and removed, and gas containing little PM passes through the gas purification catalyst layer. Therefore, contact hindrance between gas and the catalyst by PM deposition is hardly caused, and there is no fear of causing remarkable rise of pressure loss due to PM deposition in the gas purification catalyst layer where a $NO_x$ catalyst is loaded. In addition, in comparison with the case where a catalyst for purifying $NO_x$ is loaded on the side of separating and forming inflow cells of the partition.walls, cell clogging due to deposition of ash during use and contact hindrance between the exhaust gas and the catalyst are hardly caused, and performance deterioration of the catalyst can effectively be inhibited. In addition, when ash deposition in the inflow cells proceeds, the cells are clogged with ash from the back end of the inflow cells. For example, when the $NO_x$ catalyst is loaded on the inflow cells, the function is remarkably deteriorated. However, in the present embodiment, since the $NO_x$ catalyst is loaded on the outflow cells, the function deterioration of the $NO_x$ catalyst can effectively be inhibited.

In the present invention, as described above, by allowing the partition wall substrate separating the inflow cells and outflow cells to have different constitutions in the thickness direction (permeation direction), the PM-trapping layer (if provided) and the region where the microparticles adhere and fix to the internal portions of the pores of the partition wall substrate are/is formed on the "inflow side", and the gas purification catalyst layer is formed on the "outflow side".

Incidentally, the average particle size of the microparticles constituting a PM-trapping layer and the microparticles adhering and fixing to the internal portions of the pores of the partition wall substrate is not particularly limited as long as it is smaller than the average pore size of the partition wall substrate. However, the average particle diameter of the microparticles of both of them is preferably 0.1 to 50 μm, more preferably 0.5 to 30 μm, and particularly preferably 1 to 10 μm. Incidentally, when the average particle diameter of the microparticles is below 0.1 μm, pores of the PM-trapping layer and the like become too small, which raises pressure loss of a catalyst-carrying filter. On the other hand, when the average particle size of the microparticles is above 50 μm, the pores of the PM-trapping layer and the like become too large, and the rate of PM in the exhaust gas passing through the PM-trapping layer and the like becomes high.

When the average particle diameter of the microparticles is below 0.5 μm, the pores of the PM-trapping layer become too small, and, in the case that the oxidation catalyst and the like is loaded, pressure loss of the filter increases. On the other hand, when the average particle size of the microparticles is above 30 μm, the pores of the PM-trapping layer and the like become too large when no catalyst is loaded, which raises the rate of PM in the exhaust gas passing through the PM-trapping layer and the like. The average particle diameter is particularly preferably 1 to 10 μm as described above from the viewpoints of little rise of pressure loss even if a catalyst is loaded and inhibiting the rate of PM passing through the PM-trapping layer.

In addition, the PM-trapping layer may have a plurality of layers (i.e., layer having two or more PM-trapping layers laminated). In addition, the pore size or the particle diameter of the PM-trapping layer may be inclined. In this case, it is preferable that the pore size or the particle diameter becomes smaller as it becomes closer to the surface in that the PM deposition inside the pores of the partition wall substrate can be inhibited and that the rise of pressure loss can be reduced.

Incidentally, in the present invention, the "average pore size" and the "porosity" mean an average pore size and a porosity measured by mercury porosimetry. However, as described later, an image taken by an SEM (scanning electron microscope) may suitably be subjected to a binary treatment for measurement and evaluation.

incidentally, the "average pore size of the partition wall substrate" means the average pore size of the partition wall substrate single body in a state where no microparticle adheres in the internal portions of the pores. On the other hand, the "average pore size in the region where the microparticles adhere and fix to the internal portions of the pores of the partition wall substrate" means the average pore size in only the region where the microparticles adhere and fix (i.e., in the case that no microparticle adhere on the outflow cell side of the partition wall substrate, it means the average pore size in the region except for the portion) .

In addition, in the catalyst-carrying filter of the present embodiment, the average pore size in the PM-trapping layer and in the region where the microparticles adhere and fix to the internal portions of the pores of the partition wall substrate is preferably 0.1 to 30 μm, more preferably 0.1 to 15 μm, furthermore preferably 0.9 to 11 μm, particularly preferable 1.5 to 6 μm. By such constitution, with effectively inhibiting the rise of pressure loss in the PM-trapping layer or the region where the microparticles adhere and fix to the internal portions of the pores of the partition wall substrate, PM can be trapped successfully (i.e., trapping to have a cake layer shape) on the surface of the PM-trapping layer and the like.

Incidentally, when the average pore size is below 0.1 μm, it is not preferable because the gas permeability becomes small to sharply raise the permeation resistance of the pores. When it is larger than 15 μm, it is not preferable because trapping performance is deteriorated, and PM emission easily exceeds the Euro 5 regulation value of Europe regulations.

Incidentally, by the average pore size of 0.9 μm or more, the rise of the pressure loss when the catalyst is loaded can be inhibited, and, by the average pore size of below 11 μm, PM emission can be made at most 1/5 of the Euro 5 regulation value of Europe regulations. In particular, by the average pore size of 1.5 μm or more, the rise of pressure loss can be inhibited even if the catalyst of 10 g/L or more is loaded, and, by the average pore size of below 6 μm, PM hardly enters the partition wall substrate, thereby having no pressure loss hysteresis.

Incidentally, the average pore size of the PM-trapping layer is measured by subjecting the partition walls where the PM-trapping layer is formed to mercury porosimetry. When the resultant pore distribution has two peaks, the peak top of the pore distribution having a smaller pore size is employed as the average pore size of the PM-trapping layer. On the other hand, in the case that the resultant pore distribution has one peak and that the pore distribution of the PM-trapping layer cannot be specified, a desired region of a cross section perpendicular to the axial direction of the partition wall is subjected to resin-filling polishing, SEM (scanning electron microscope) observation is performed with a vision at 100 to 1000-fold magnification, the obtained image is subjected to a binary treatment, the diameter of a circle inscribed in a gap among the microparticles is measured in at least five positions, and the obtained values are averaged to obtain the average pore size of the PM-trapping layer.

In addition, when the average particle diameter of the microparticles forming the PM-trapping layer and the like is measured, a cross section obtained by subjecting a desired region of a cross section perpendicular to the axial direction of the partition wall substrate to resin-filling polishing or a fracture cross section is observed with an SEM (scanning electron microscope) with a vision at 100 to 1000-fold magnification to measure the particle diameter of the microparticles forming the PM-trapping layer. The average of the entire particle diameters measured in one vision is defined as the average particle diameter.

In addition, when a PM-trapping layer is formed on the inflow cell side surface of the partition wall substrate, it is preferable that the thickness of the PM-trapping layer is 3/500 to 1/2 of the thickness of the portion of the partition wall substrate, the portion separating the cells. In order to secure 90% or more of the trapping efficiency by loading 60 g/L or more of the $NO_x$ catalyst, the thickness is more preferably 1/150 to 1/5 of the thickness of the portion of the partition wall substrate, the portion separating the cells. In order to form a uniform PM-trapping layer to respond to the particulate number regulation by loading 100 g/L or more of the $NO_x$ catalyst, the thickness is particularly preferably 1/100 to 1/10 of the thickness of the portion of the partition wall substrate, the portion separating the cells. Incidentally, when the thickness of the PM-trapping layer is below 3/500 of the thickness of the portion of the partition wall substrate, the portion separating the cells, the PM-trapping layer is too thin, and the PM cannot be trapped sufficiently to be able to easily allow a part of the PM to pass through the PM-trapping layer. In addition, when the thickness of the PM-trapping layer is above 1/2 of the thickness of the portion of the partition wall substrate, the portion separating the cells, the influence of the rise of pressure loss due to the PM-trapping layer increases, and the initial pressure loss of the catalyst-carrying filter may be increased.

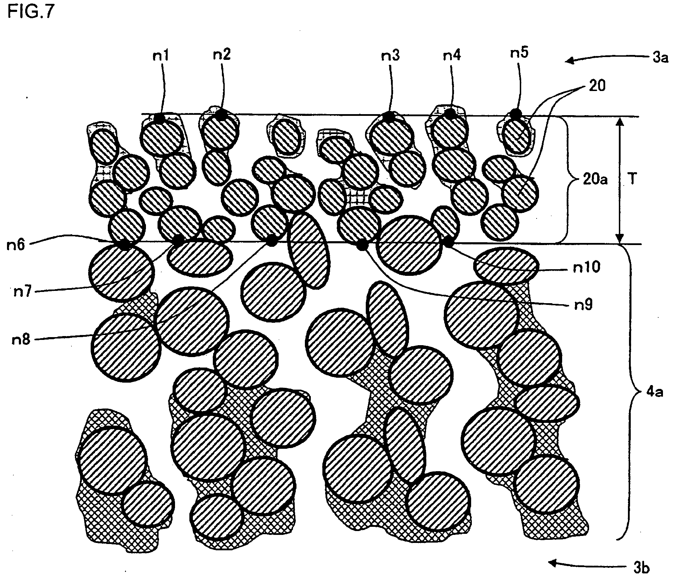

Incidentally, in the present invention, the "thickness of the PM-trapping layer" means the distance between the average of the positions of at least five top portion of the microparticles constituting the PM-trapping layer and the average of the portions of at least five top portions of the microparticles entering on the partition wall substrate side (i.e., the distance between a line segment drawn by the average of the five top portions on one side and a line segment drawn by the average of the five top portions on the other side). Such thickness of the PM-trapping layer is measured by, for example, enlarging a cell cross section with an electron microscope or an optical microscope. For example, Fig. 7 shows an example of the case of obtaining the thickness T of the PM-trapping layer by a distance between the line segments of average positions of the five top portions, n1 to n5, of the microparticles 20 constituting the PM-trapping layer 20a and the five top portions, n6 to n10, of the microparticles 20 entering on the partition wall substrate 4a side. Here, Fig. 7 is a cross-sectional view schematically showing a method for obtaining the thickness of the PM-trapping layer.

In addition, when the microparticles adhere to the internal portions of the pores of the partition walls, thickness of the partition walls where the microparticles adhere (i.e., the thickness of the partition wall in the region where the microparticles adhere) is preferably 3/500 to 1/2, more preferably 1/125 to 1/5, and particularly preferably 1/100 to 1/10 of the thickness of the portion of the partition wall substrate, the portion separating the cells. For example, when the thickness of the partition walls where the microparticle adhere is below 3/500 of the thickness of the portion of the partition wall substrate, the portion separating the cells, the region where the microparticles adhere is too narrow (thin), and it may be difficult to trap PM. When it is above 1/2, the region where the microparticles adhere is too wide (thick), and pressure loss may rise.

Incidentally, when the thickness of the partition walls where the microparticles adhere is below 1/125 of the thickness of the portion of the partition wall substrate, the portion separating the cells, a local defect (pin hole) may be caused. On the other hand, when it is above 1/5, the rise of pressure loss may increase unless the amount of the NOx catalyst loaded is suppressed to 100 g/L or less. In addition, in order to reduce a local defect and suppress the rise of pressure loss even if the amount of the loaded catalyst is large, the thickness is particularly preferably 1/100 and 1/10 as described above.

Though there is no particular limitation on the material of the microparticles constituting the PM-trapping layer and the microparticles adhering and fixing to the internal portions of the pores of the partition wall substrate, the microparticles constituted of a ceramic material is preferable. Specifically, one of cordierite, silicon carbide, alumina, mullite, aluminum titanate, and silicon nitride is preferable.

In addition, it is more preferable that these microparticles are constituted of the same material as the material for constituting the partition wall substrate. For example, in the case that the partition wall substrate is constituted of a ceramic material, it is preferable that the microparticles are constituted of the same ceramic material as the material for the partition wall substrate. By such constitution, the thermal expansion of the partition wall substrate and that of the microparticles become the same, thereby hardly causing damages or the like by the temperature change upon compulsory regeneration of a catalyst-carrying filter.

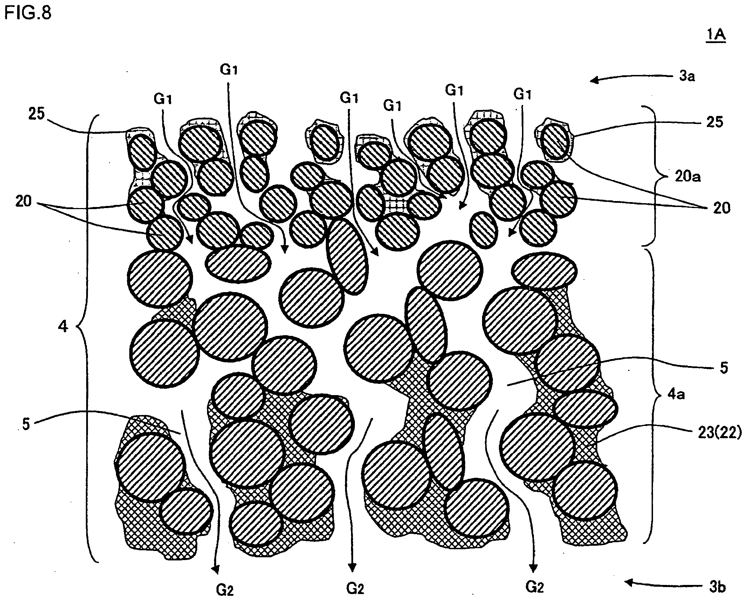

Fig. 4 shows an example of the case that the partition walls 4 are constituted of the partition wall substrate 4a, the PM-trapping layer 20a, and the microparticles 21 adhering and fixing to the internal portions of the pores 5a. In the structure shown in Fig. 8 (not within the scope of the invention), the partition walls 4 may be constituted of the partition wall substrate 4a and the PM-trapping layer 20a of the microparticles 20 depositing and fixing on the inflow cell side surface of the partition wall substrate 4a on the side of separating and forming the inflow cells 3a in the catalyst-carrying filter of the present invention. Within the scope of the invention, for example, the partition walls 4 may be constituted of the partition wall substrate 4a and the microparticles 21 adhering and fixing to the internal portions of the pores 5a in the range of a predetermined partition wall thickness from the inflow cell side surface.

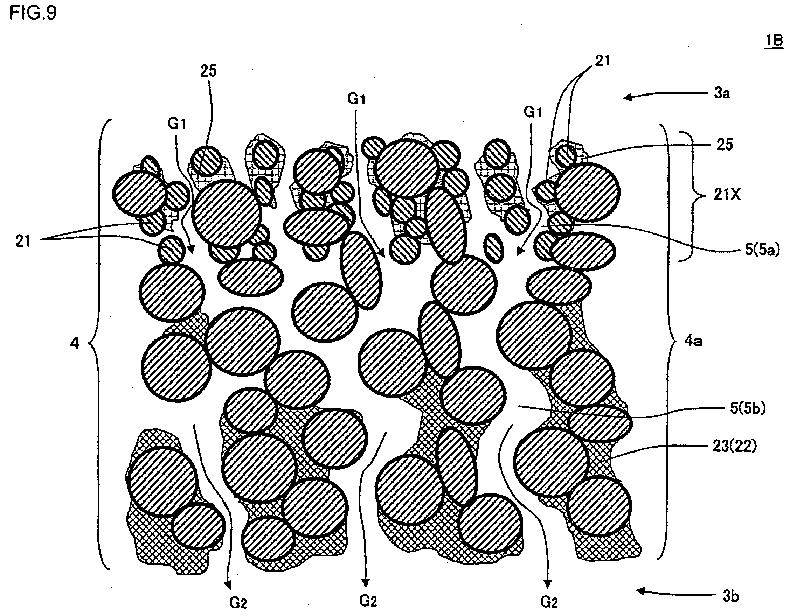

Fig. 9 is a cross-sectional views showing an enlarged portion of a partition wall of another embodiment of a catalyst-carrying filter of the present invention. Incidentally, the enlarged portion is a portion which is the same as the portion shown by P of a partition wall of the catalyst-carrying filter in Fig. 3. In the catalyst-carrying filters 1A, 1B shown in Figs. 8 and 9, regarding the same elements as those in the catalyst-carrying filter 1 shown in Fig. 3, descriptions will be omitted with imparting the same reference numerals.

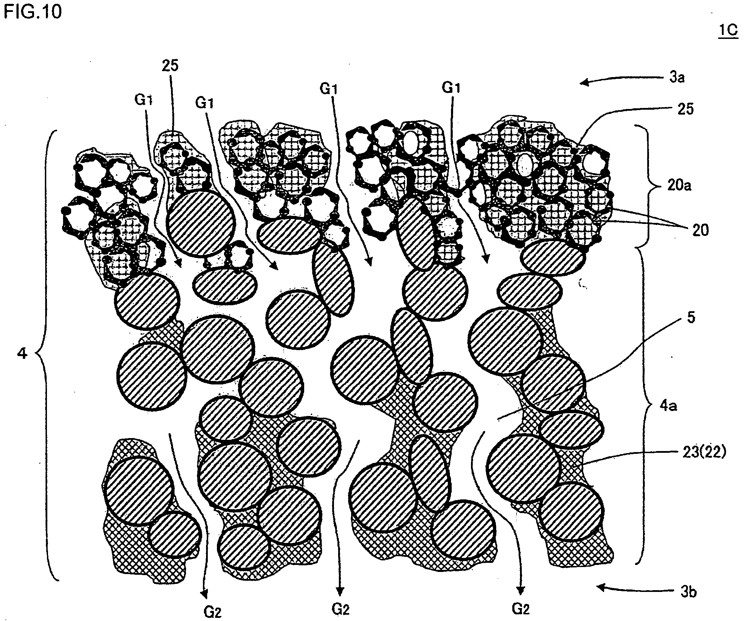

In addition, in a catalyst-carrying filter of the present embodiment, as shown in Fig. 10, it is preferable that the PM-trapping layer 20a has a mesh structure (Fig. 10 shows a structure not itself within the scope of the invention). Such constitution can suppress gas permeation resistance of the PM-trapping layer. In the case that the structure of the PM-trapping layer is made the same as that of the partition wall substrate (i.e., in the case of a structure which is not a mesh structure), gas permeation resistance increases for the decrease in pore size. However, the gas permeation resistance can be made smaller than that of the partition wall substrate by the mesh structure. Therefore, substantial gas permeation resistance can hardly be found. In addition, the rise in the pressure loss at this time a catalyst is carried on the PM-trapping layer can be inhibited, and a catalyst surface area is increased to have an effect in accelerating PM combustion. Incidentally, the "mesh structure" means a structure where the particle itself has a hollow ring shape or where a needle-shaped particle or a plate-shaped particle grows or is bonded to form a depression or a hollow.

Here, Fig. 10 is a cross sectional view showing an enlarged part of a partition wall of a catalyst-carrying filter. Incidentally, the enlarged portion is a portion which is the same as the portion shown by P of the partition wall of a catalyst-carrying filter in Fig. 3. In a catalyst-carrying filter 1C shown in Fig. 10, regarding the same elements as those in the catalyst-carrying filter 1 shown in Fig. 3, descriptions will be omitted with imparting the same reference numerals.

In addition, in a catalyst-carrying filter of the present embodiment, the partition wall substrate and the microparticle constituting the PM-trapping layer, and the microparticle adhering and fixing to the internal portions of the pores of the partition wall substrate may have a sintered phase obtained by unitary sintering. By such constitution, the partition wall substrate and the microparticles constituting the PM-trapping layer and the like are firmly bonded to each other, they can withstand the temperature change upon compulsory regeneration. In addition, the filter has a corrosion resistance against urea, ammonia, cyanuric acid, biuret, and the like and can withstand volume expansion due to crystallization.

Incidentally, the aforementioned sintered phase means a phase formed by the sintering of a part of the partition wall substrate and the aforementioned ceramic raw material when a PM-trapping layer is formed by sintering a ceramic raw material (microparticles) for forming a PM-trapping layer and the like disposed on the surface of the partition wall substrate or in the internal portions of the pores of the partition wall substrate. Such a sintered phase can be confirmed by, for example, observing a cross section of the partition walls with an electronic microscope to find that the particles are unitarily formed with no particle boundary. Incidentally, it includes a case that part of the components form glass phase unitarily. In the case of different components, for example, by component analysis with EDS (EDX), the phase can be confirmed by finding that at least part of the components are mutually dispersed in the vicinity of the particle boundary. Incidentally, EDS and EDX are abbreviations of Energy Dispersive X-ray Spectroscopy.

As described above, in the case that the PM-trapping layer is made to have a mesh structure, as microparticles forming the PM-trapping layer, linear particles, plate-shaped particles, needle-shaped particles, or a mixture of these particles are used, or an organic component is mixed with the microparticles to be used to allow the microparticles to be agglutinated. This forms a layer (PM-trapping layer) in the state that a space larger than the microparticles is secured inside the PM-trapping layer or among the microparticles, and the structure becomes a mesh structure.

The PM-trapping layer traps PM on the surface thereof and inhibits a large amount of PM from entering the pores of the partition wall substrate. Since also the region where the microparticles adhere and fix to the internal portions of the pores inhibits a large amount of PM from entering, it is preferable that the PM-trapping layer and the aforementioned region have pores having an average pore size smaller than that of the partition wall substrate. Therefore, the average pore size of the PM-trapping layer and the like is preferably 1/1000 to 9/10 times the average pore size of the partition wall substrate, more preferably 1/100 to 1/2 times the average pore size of the partition wall substrate, particularly preferably 1/20 to 1/5 times the average pore size of the partition wall substrate. When the average pore size of the PM-trapping layer and the like is below 1/1000 times the average pore size of the partition wall substrate, the pores of the PM-trapping layer and the like are too small, and pressure loss of the catalyst-carrying filtermaybecome large. On the other hand, when the average pore size of the PM-trapping layer and the like is above 9/10 times the average pore size of the partition wall substrate, the pores of the PM-trapping layer and the like are too large, and there is no substantial difference from the pores of the partition wall substrate. This allows PM to enter the pores of the PM-trapping layer and the like, and the pressure loss may increase. That is, the same state as the aforementioned rise in initial pressure loss may be caused.

Incidentally, even in the case that the average pore size of the PM-trapping layer and the like is at most 1/20 times the average pore size of the partition wall substrate, by forming a mesh structure where the microparticles are not filled at highest density, even if the average particle diameter of the PM-trapping layer and the like is too small, the effect in inhibiting the rise of the pressure loss of the catalyst-carrying filter is large, which is preferable. In addition, even in the case that the average pore size of the PM-trapping layer and the like is at least 1/5 times the average pore size of the partition wall substrate, by providing an additional function for enhancing the PM-trapping performance, even if the average pore size of the PM-trapping layer and the like is too large, the rate of the PM entering the internal portion of the partition wall substrate can be lowered, and the effect in inhibiting the rise of pressure loss of the catalyst-carrying filter, which is preferable. Specific examples of the additional function for enhancing the PM-trapping performance are trapping the PM by electrostatic adsorption with storing static electricity on the surface by partially using a material having high electric insulation, or imparting a hydrophilic group or a lipophilic group so that water or oil contained in the PM can easily be adsorbed.

In addition, the porosity of the PM-trapping layer is preferably 40 to 90%, more preferably 50 to 80%. When the porosity of the PM-trapping layer is below 40%, there may be caused a problem of increasing the pressure loss, while, when the porosity is above 90%, since the strength of the PM-trapping layer is insufficient, there may be caused a problem of exfoliation of the PM-trapping layer from the surface of the partition wall substrate, which is not preferable. Further, when the porosity of the PM-trapping layer is below the aforementioned range, since the amount of particulates depositing is large, there arises a problem of difficulty in the filter regeneration operation. When the porosity is above the aforementioned range, strength of the catalyst-carrying filter is reduced to cause a problem of difficulty in canning, which is not preferable.

Incidentally, it is preferable that the porosity of the PM-trapping layer is higher than the porosity of the partition wall substrate by 5% or more because the pressure loss (permeation pressure loss) can be made small in the PM-trapping layer.

Incidentally, the porosity of the PM-trapping layer can be measured by subjecting a desired region of a cross section perpendicular to the axial direction of the partition walls to resin-filling polishing, observing with SEM (scanning electron microscope) with a vision at 100 to 1000-fold magnification, and the obtained image is subjected to a binary treatment to obtain the area ratio of the gap to the particles in one vision.

Such PM-trapping layer can be formed by, for example, preparing slurry containing a ceramic raw material such as silicon carbide powder and the like, immersing the honeycomb structure in the slurry, and then firing the structure(firing of the structure for forming the PM-trapping layer). Incidentally, upon immersing the honeycomb structure, only the partition wall substrate separating and forming the inflow cells is allowed to be brought into contact with the aforementioned slurry so that the PM-trapping layer is formed only in the internal portions of the inflow cells (i.e., so that no PM-trapping layer is formed in the internal portions of the outflow cells). For example, by a method where the honeycomb structure is immersed in the aforementioned slurry in the state that open portions of predetermined cells are plugged in advance or by a method where the honeycomb structure is immersed in the aforementioned slurry in the state that open portions of predetermined cells are masked, the PM-trapping layer can be formed only on the partition wall substrate separating and forming the inflow cells. Incidentally, by allowing the aforementioned slurry to enter the internal portions of the pores of the partition wall substrate, the microparticles can be adhered to the internal portions of the pores of the partition wall substrate. For example, by adjusting the amount of the slurry, it is possible to allow the microparticles to adhere to the internal portions of the pores of the partition wall substrate with forming the PM-trapping layer, and it is possible to allow the microparticles to adhere only to the internal portions of the pores of the partition wall substrate without forming the PM-trapping layer on the surface of the partition wall substrate.

The size of the ceramic raw material particles contained in the slurry for forming the PM-trapping layer is preferably smaller than the size of the raw material particles for forming a honeycomb structure (i.e., particles for forming the partition wall substrate). For example, for the silicon carbide powder contained in the slurry for forming the PM-trapping layer, it is preferable to use particles having an average particle diameter of 0.3 to 5 $\mu$m. In addition, slurry having a viscosity of about 50,000 cP obtained by dispersing such a silicon carbide powder in a dispersion medium of an organic polymer material and the like can suitably be used. In addition, the firing temperature upon firing the PM-trapping layer is preferably about 1400 to 1500°C. By such constitution, the porous PM-trapping layer having pores having an average pore size smaller than that of the partition wall substrate can be formed.

Inaddition, in the catalyst-carrying filter of the present embodiment, to the PM-trapping layer and the like, not only the aforementioned role (function) of trapping PM beforehand with inhibiting PM from entering the pores of the partition wall substrate, but also the role (function) of subjecting the trapped PM to an oxidation treatment may be imparted.

That is, the PM-trapping layer may be a layer where an oxidation catalyst is loaded on at least one of the surface of the PM-trapping layer and the internal portions of the pores of the PM-trapping layer. By such constitution, the function as a PM-trapping layer for trapping PM is combined with the function for subjecting the PM to an oxidation treatment are complied with each other to trap PM securely in the inflow side layer of the partition walls and oxidize the PM. As a result, the regeneration efficiency as a catalyst-carrying filter can remarkably be improved synergistically with the gas purification catalyst layer described later. That is, by the regeneration treatment (oxidizing treatment) of the PM depositing on the PM-trapping layer, local $O_2$ concentration can be lowered, and thereby the $NO_x$ purification efficiency can be raised by the gas purification catalyst layer on the outflow cell side.

As such an oxidation catalyst, noble metals such as platinum (Pt), palladium (Pd), rhodium (Rh), and silver (Ag) can suitably be used.

Incidentally, in the catalyst-carrying filter of the present embodiment, besides the aforementioned catalyst, another catalyst or purification material may further be loaded. For example, a promoter represented by oxides of cerium (Ce) and/or zirconium (Zr) may be loaded.

Incidentally, such an oxidation catalyst may further be loaded on at least a part of the internal portions of the pores of the partition wall substrate. By such constitution, even in the case the a part of PM in exhaust gas passes through the PM-trapping layer and enters the pores of the partition wall substrate without being trapped by the PM-trapping layer, the PM can be combusted and removed by the oxidation catalyst.

Though there is no particular limitation on the amount of such an oxidation catalyst loaded, it is preferably 1 to 34 g/L, more preferably 5 to 30 g/L. For example, when the amount of the oxidation catalyst is below 1 g/L, the PM combustion performance may be insufficient, while, when it is above 34 g/L, pores of the PM-trapping layer may be clogged, and pressure loss may remarkably increase even in a state that no soot deposits. Since the PM deposits almost in the portion of the PM-trapping layer, the loading in the internal portions of the pores of the partition walls is unnecessary. Therefore, the load amount can be reduced in comparison with the conventional load amount.

[1-3] Gas purification catalyst layer:

In the catalyst-carrying filter of the present embodiment, a gas purification catalyst layer where a catalyst purifying at least $NO_x$ is loaded is formed on at least one of the partition wall substrate separating and forming the outflow cells and the internal portions of the pores of the partition wall substrate.

As the catalyst for purifying $NO_x$, for example, there may be employed at least one kind selected from the group consisting of a selective reduction type $NO_x$ catalyst, a $NO_x$ adsorber catalyst, a three-way catalyst, a four-way catalyst, and a multi-way catalyst of five ways or more. Other catalysts or purification materials may further be loaded.

Incidentally, the "selective reduction type $NO_x$ catalyst" means a catalyst purifying $NO_x$ by selectively reacting $NO_x$ with a reduction component in a lean atmosphere. For example, the catalyst can be obtained by loading at least one kind of noble metal selected from the group consisting of copper, cobalt, nickel, iron, gallium, lanthanum, cerium, zinc, titanium, calcium, barium, and silver on a coating material containing zeolite or alumina. In the catalyst-carrying filter of the present embodiment, as the aforementioned selective reduction type $NO_x$ catalyst, a urea selective reduction type $NO_x$ catalyst can suitably be employed.

In addition, the $NO_x$ adsorber reduction catalyst" means a catalyst which adsorbs $NO_x$ when the air-fuel ratio is in a lean state and reduces the adsorbed $NO_x$ to $N_2$ when rich spike is performed at regular intervals (when the exhaust gas was made to be fuel rich). For example, the catalyst can be obtained by loading a noble metal such as platinum, palladium, or rhodium and at least one kind of metal selected from the group consisting of alkali metals and alkali earth metals on a coating material of a metal oxide such as alumina, zirconia, or titania.

In addition, the "three-way catalyst" means a catalyst mainly purifying hydrocarbon (HC), carbon monoxide (CO), and nitrogen oxide ($NO_x$). Examples of the catalyst include a catalyst containing platinum (Pt), palladium (Pd), or rhodium (Rh). By these catalyst, hydrocarbon is purified to be water and carbon dioxide, carbon monoxide is purified to be carbon dioxide, and nitrogen oxide is purified to be nitrogen, each being performed by oxidation or reduction.

Further, examples of the "four-way catalyst" include a catalyst having a purification function by the three-way catalyst and a soot purification function (e.g., PM oxidation catalyst). In addition, examples of the "multi-way catalyst of five ways or more" include a catalyst of components where the aforementioned three-way catalyst or $NO_x$ adsorber reduction catalyst is combined with the PM oxidation catalyst.

The load amount of the catalyst for purifying $NO_x$ ($NO_x$ catalyst) is preferably 35 g/L or more, more preferably 35 to 500 g/L, furthermore preferably 35 to 300 g/L, particularly preferably 100 to 200 g/L. When the amount of the $NO_x$ catalyst is below 35 g/L, purification performance may be insufficient. When the amount of the $NO_x$ catalyst is above 500 g/L, the cells may be clogged, and the pressure loss may remarkably increase even in the state without soot deposition.

Though there is no particular limitation on the method for loading the $NO_x$ catalyst, for example, there may be employed a method where a catalyst solution containing the aforementioned catalyst component is wash-coated on the partition wall substrate of the honeycomb structure and then baked by a thermal treatment at high temperature. In addition, for example, by a method where ceramic slurry is allowed to adhere to a honeycomb structure on the outflow cell side of the partition wall substrate thereof by the use of a conventionally known ceramic membrane formation method such as a dipping method and then dried and fired, a thin membrane-shaped gas purification catalyst layer can be formed. At this time, the average pore size of the gas purification catalyst layer can be adjusted to have desired values by controlling the grain size, compounding ratio, and the like of the framework particles in the ceramic slurry; the porosity can be adjusted to have desired values by controlling the grain size, amount of the pore former, and the like of the framework particles in the ceramic slurry; and the thickness of the coat layer (membrane) can be adjusted to have desired values by controlling the concentration of the ceramic slurry, time required for the membrane formation, and the like.

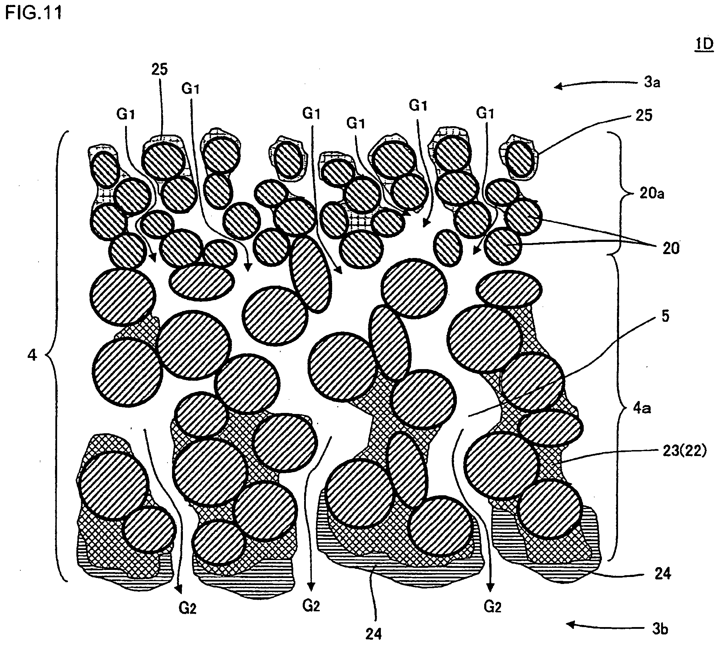

In addition, in the catalyst-carrying filter of the present embodiment, for example, as shown in Fig. 11, a preventing ammonia slip catalyst layer 24 having a preventing ammonia slip catalyst loaded thereon may be loaded on at least one of the outflow cell side surface of the partition wall substrate and the internal portions of the pores in the range of the predetermined partition wall thickness from the outflow cell side surface. By such a preventing ammonia slip catalyst layer 24, when $NO_x$ purification is performed with ammonia as a reducing agent, the outflow of the ammonia from the downstream side of the catalyst-carrying filter can effectively be inhibited even in the case that ammonia is supplied excessively. In addition, in comparison with the purification system where the preventing ammonia slip catalyst and the like are separately disposed on the downstream side of the catalyst-carrying filter, the apparatus can be made compact.

Here, Fig. 11 is a cross-sectional view showing an enlarged part of a partition wall of a catalyst-carrying filter not itself within the scope of the present invention. Incidentally, the enlarged portion is a portion which is the same as the portion shown by P of the partition wall of a catalyst-carrying filter in Fig. 3. In a catalyst-carrying filter 1D shown in Fig. 11, regarding the same elements as those in the catalyst-carrying filter 1 shown in Fig. 3, descriptions will be omitted with imparting the same reference numerals.

In such a structure, in the case where the preventing ammonia slip catalyst is loaded on the internal portions of the pores of the partition wall substrate from the outflow cell side surface, it.is preferably loaded in the range of a thickness of below - 1/2 of the thickness of the portion of the partition wall substrate, the portion separating the cells.

In addition, it is preferable that the preventing ammonia slip catalyst layer is formed partially (zone formation) in the region on the outflow end face side of the honeycomb structure. By such constitution, when excessive ammonia is introduced into the catalyst-carryingfilter, ammonia can be subjected to a decomposition treatment on the outflow end face side, and the discharge of the ammonia from the outflow end face side of the catalyst-carrying filter can effectively be inhibited.

Insidentally, "to be formed partially in the region on the outflow end face side of the honeycomb structure" means to be formed not in the entire region in the longitudinal direction (i.e., cell extension direction) of the honeycomb structure, but "partially" in the region on the outflow end face side with respect to the central portion in the longitudinal direction of the honeycomb structure. Incidentally, the partial formation in a specific region as described above is sometimes referred to as "zone formation". The preventing ammonia slip catalyst is formed in the range of more preferably 60%, particularly preferably 30%, in the longitudinal direction from the outflow side end face of the honeycomb structure. By the limitation of the catalyst-carrying region on the outflow end portion side, pressure loss rise due to the loading of catalyst can be inhibited. In addition, though the gas flowing through the partition wall on the outflow end face side passes through the inflow cells with no chance of contact with the $NO_x$ catalyst or the preventing ammonia slip catalyst by the limitation of the catalyst-carrying region on the outflow end portion side, the amount of the gas flowing through the partition walls on the outflow end face side is suppressed, and the contact chance with the catalyst can be increased.

Incidentally, as the preventing ammonia slip catalyst, there may be employed a conventionally known preventing ammonia slip catalyst used for removing excessive ammonia passing through the $NO_x$ catalyst which is disposed on the downstream side of the $NO_x$ catalyst. For example, preventing ammonia slip catalysts described in JP-A-2008-279334, JP-A-2004-270565, Japanese Patent No. 3051142, JP-A-63-100919, JP-A-1-135541, and the like may be employed.

Specifically, the catalyst can be obtained by loading, for example, platinum (Pt), palladium (Pd), rhodium (Rh), copper (Cu), or the like on a matrix of alumina or the like. The matrix may be titania, silica, zirconia, tungsten oxide, zeolite, a transition metal oxide, a rare-earth oxide, or a composite oxide of these besides alumina.

In addition, as the preventing ammonia slip catalyst, it is also possible to employ a catalyst of zeolite subjected to ion exchange with at least one kind of metal selected from the group consisting of platinum (Pt), palladium (Pd), rhodium (Rh), iridium (Ir), and ruthenium (Ru).

The aforementioned catalyst obtained by loading platinum (Pt) or the like on the matrix can suitably be manufactured by a known method where, for example, an inorganic matrix such as alumina is mixed with an aqueous solution of metal salt such as chloroplatinic (IV) acid, diammine platinum (II) nitrite, hydroxyplatinic acid amine solution, chloroplatinic acid, dinitrodiammine palladium, palladium nitrate, palladium chloride, rhodium (III) chloride, or rhodium (III) nitrate, followed by drying and firing.

Incidentally, though there is no particular limitation on the load amount of such a preventing ammonia slip catalyst, the amount is preferably 0.5 to 50 g/L, more preferably 1 to 30 g/L. For example, when the load amount of the oxidation catalyst is bellow 0.5 g/L, the preventing ammonia slip performance may be insufficient, while, when it is above 50 g/L, pores of the PM-trapping layer are clogged, and pressure loss may remarkably rise even in the state of no soot deposition. Since PM deposits almost in the portion of the PM-trapping layer, loading in the internal portions of the pores of the partition walls is unnecessary. Therefore, the load amount can be decreased in comparison with a conventional load amount. Incidentally, in the case of zone coat, it shows the amount per volume of the coated region.

[2] Diesel engine having exhaust gas purification system:

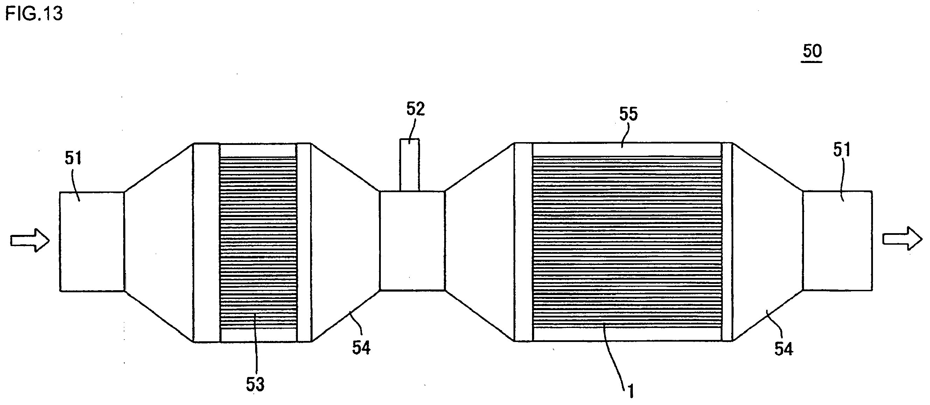

Next, an embodiment of an exhaust gas purification system used in the present invention will specifically be described. The exhaust gas purification system of the present embodiment is an exhaust gas purification system 50 provided with the above-described catalyst-carrying filter 1 of the present invention. That is, as shown in Fig. 13, it is an exhaust gas purification system 50 provided with a catalyst-carrying filter 1 of the present invention disposed inside the exhaust gas flow passage 51 where exhaust gas discharged from a diesel engine passes and a reducing agent supply portion 52 disposed in the exhaust gas flow passage 51 on the upstream side of the catalyst-carrying filter 1 and spraying and supplying a urea aqueous solution or an ammonia aqueous solution into the exhaust gas. Here, Fig. 13 is an explanatory view schematically showing an embodiment of an exhaust gas purification system used in the present invention and cross-sectional view where a part is cut off of the exhaust gas purification system.

The exhaust gas purification system of the present embodiment is provided with the above-described catalyst-carrying filter of the present invention, can successfully conduct trapping of particulates in exhaust gas and purification of harmful components (particularly $NO_x$) in exhaust gas, effectively inhibiting excessive rise of pressure loss, is excellent in regeneration controllability, and has a compact structure.

Incidentally, in the exhaust gas purification system 50 shown in Fig. 13, an example where a diesel oxidation catalyst (DOC) 53 is further provided on the upstream side of the reducing agent supply portion 52. In addition, the catalyst-carrying filter 1 and the diesel oxidation catalyst (DOC) 53 are held by, for example, a ceramic non-intumescent mat 55 as a holding member and canned by the use of a metal (e.g., stainless steel) can 54.

Incidentally, the reducing agent supply portion is a supply portion for spraying and supplying an ammonia solution into the exhaust gas or generating ammonia by hydrolysis of urea by spraying a urea aqueous solution into exhaust gas, and a reducing agent supply portion constituted in the same manner as a reducing agent supply portion used for a conventionally known SCR (Selective Catalytic Reduction) catalyst apparatus can suitably be employed.

Example

Hereinbelow, the present invention will specifically be described with Examples. However, the present invention is by no means limited to these Examples. Various evaluations and measurements in the Examples were carried out according to the following methods. Examples 6 and 7 illustrate the present invention. Examples 1 - 5, 8 and 9 are not within the scope of the invention.

[1] PM adhesion pressure loss (kPa):

Pressure loss in a state that PM of 3 g/L was deposited on the catalyst-carrying filter was measured. Incidentally, the exhaust gas flow rate upon depositing the PM was 7 $m^3$/min., and the exhaust gas temperature was 200°C. Incidentally, for the measurement of the pressure loss, a diesel engine was used.

[2] Pressure loss hysteresis (%):

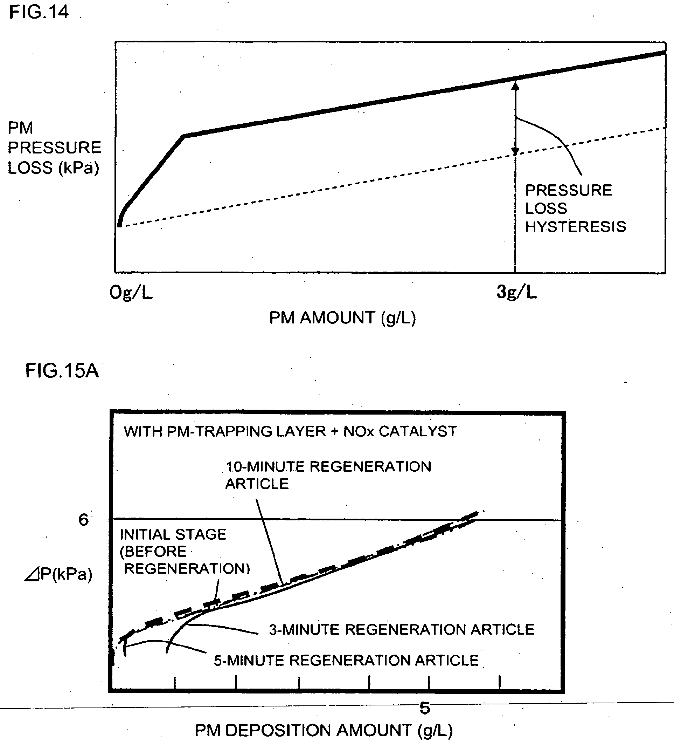

The pressure loss from the state of no PM deposition to the state of deposition of PM of 3 g/L on the catalyst-carrying filter was successively measured, and a graph with the horizontal axis as PM deposition amount (g/L) and the vertical axis as pressure loss (kPa) as shown in Fig. 14 was prepared. Then, measurement was performed according to the following formula (2) with the change rate of the pressure loss (kPa) upon 3 g/L deposition when the straight line having the same slope as the straight line through the pressure loss (kPa) upon 1 g/L deposition and the pressure loss (kPa) upon 3 g/L deposition was slid so as to pass the state of no PM deposition (pressure loss upon 0 g/L PM deposition) as the pressure loss hysteresis (%). The change rate (pressure loss hysteresis) is a reduction rate with the pressure loss (kPa) upon 3 g/L deposition of an actual measurement value as 100%.

$$\text{Pressure loss hysteresis (\%)} = [\text{pressure loss (actual measurement) upon 3 g/L deposition} - \text{pressure loss upon being slid}] / (\text{pressure loss (actual measurement) upon 3 g/L deposition}) \times 100 \quad \ldots (2)$$

Here, Fig. 14 is the aforementioned graph showing a relation between the PM deposition amount (g/L) and the pressure loss (kPa) and used for calculation of pressure loss hysteresis.

[3] Deterioration evaluation on $NO_x$ purification catalyst:

Evaluation was made for the catalyst performance (presence/absence of deterioration) of a selective reduction type $NO_x$ catalyst in a state that ash of 50 g/L was deposited on a catalyst-carrying filter. Incidentally, for this deterioration evaluation, a 6L diesel engine was used for the evaluation of whether the $NO_x$ amount in exhaust gas can clear the P-NLT regulation (Post New Long Term regulation (sometimes referred to as JP09 regulation)) standard. The evaluations were given with "good" in the case that the above standard was cleared and "bad" in the case that the above standard could not be cleared.

[4] Compactness (entire length):

The length of the exhaust gas purification system including a catalyst-carrying filter was measured. Incidentally, the "length of the exhaust gas purification system" is the total length of function portions of an oxidation catalyst-carrying filter (CSF), selection type catalyst reduction filter (SCF), and a preventing ammonia slip catalyst (ASC). In the case of a purification system of an apparatus where each of the portions was separated from one another, the total length of the portions was defined as the entire length. In the case of an apparatus where the functions were integrated, the length of the apparatus was defined as the entire length. Incidentally, the entire length does not include the length of the pipes connecting the apparatuses with one another.

[5] PM deposition limit amount (g/L)

PM (soot) was deposited on the catalyst-carrying filter, and the PM deposition amount (g/L) at the time the temperature upon filter regeneration reached 1100°C was defined as the PM deposition limit amount (g/L) of the filter. Incidentally, in the measurement, a 6L diesel engine was used with the filter regeneration method of post-injection and the drop from the 600°C regeneration to the idle rotation as the regeneration condition.

[6] Durability:

The PM deposition amount (g/L) at the time the temperature upon filter regeneration reached 900°C was measured in advance, and the amount of PM (soot) was deposited to perform compulsory regeneration. Incidentally, a 6L diesel engine was used with the filter regeneration method of post-injection and the drop from the 600°C regeneration to the idle rotation as the regeneration condition. After the aforementioned soot deposition and regeneration were repeated 100 times, a cross section was observed to confirm presence/absence of PM leakage. The PM leakage means discharge of PM which passed through the catalyst-carrying filter from the end face on the outflow side and was judged according to presence/absence of leakage of the number of particulates complying with the particulate number regulation ($6 \times 10^{11}$/km level). The evaluations were given with "good" in the case that the aforementioned particulate number regulation could be cleared and "bad" in the case that it could not be cleared or in the case that defects such as a crack were present.

(Example 1)

In the first place, as a raw material for manufacturing a honeycomb structure (specifically, partition wall substrate) for a catalyst-carrying filter, there was used a cordierite-forming raw material prepared by mixing plural materials among talc, kaolin, calcined kaolin, alumina, calcium hydroxide, and silica at a predetermined ratio to have a chemical composition of 42 to 56 mass% of $SiO_2$ (silica), 30 to 45 mass% of $Al_2O_3$ (alumina), and 12 to 16 mass% of MgO (magnesia). To 100 parts by mass of the cordierite-forming raw material, 12 to 15 parts by mass of graphite as a pore former and 5 to 15 parts by mass of a synthetic resin were added. Further, after appropriate amounts of methyl cellulose and a surfactant were added to the material, water was added thereto, and they were kneaded to prepare kneaded clay. After the kneaded clay was subjected to vacuum deaeration, it was subjected to extrusion forming to obtain a honeycomb formed article. Next, the honeycomb formed article was fired to obtain a honeycomb fired article (porous partition wall substrate). The firing was performed at 1400 to 1430°C and 10 hours.

Next, plugging was performed in the honeycomb fired article. A mask was alternately attached to cell opening portions on one end face of the honeycomb fired article in a checkerwise pattern, and the end portion where the mask was attached was immersed in plugging slurry containing a cordierite material as a ceramic raw material to form plugging portions alternately disposed in a checkerwise pattern. Further, regarding the other end portion, a mask was attached for the cells plugged on the one end portion, and plugging portions were formed in the same manner as the aforementioned manner for forming plugging portions on the one end portion.

Next, in order to form a PM-trapping layer, a material containing cordierite microparticles and silica microparticles

for forming the PM-trapping layer, water, and an organic binder was prepared and filled into the cells of the honeycomb fired article, followed by applying pressure. The cordierite microparticles and silica microparticles were filtrated by a honeycomb sintered article and deposited on the surface of the sintered article so as to cover the sintered article (partition wall substrate). Thus, by a deposited coat layer, the PM-trapping layer was formed. Then, after the air blow, it was dried at 120°C for 24 hours. Incidentally, the average particle diameter of the microparticles (cordierite microparticles and silica microparticles) for forming the PM-trapping layer was 2 $\mu$m.

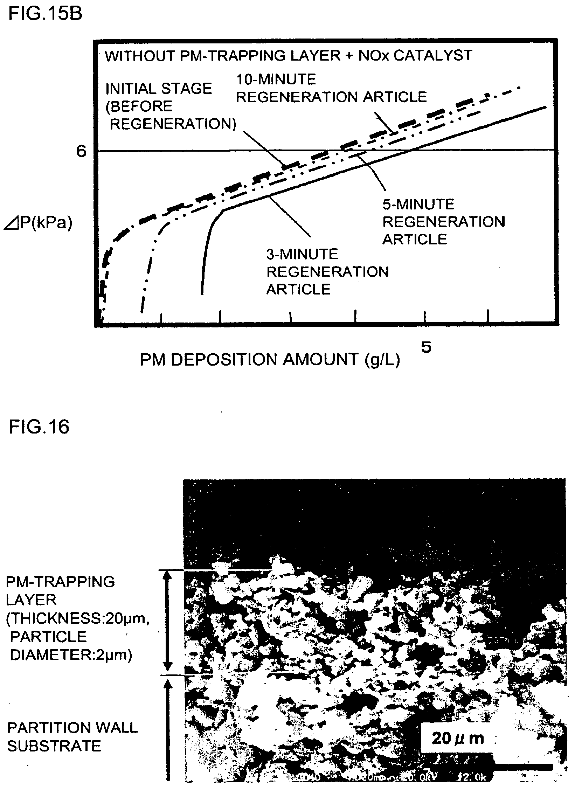

The dried honeycomb fired article with a PM-trapping layer (the PM-trapping layer had not been fired) was fired at 1430°C for 3 hours to obtaina circular cylindrical honeycomb structure having a diameter of 266.7 mm and an entire length of 304.8 mm. The cell density of the partition wall substrate in the honeycomb structure obtained above was 46. 5 cells/cm$^2$ (300cpsi), and the thickness of the partition walls was 304.8 $\mu$m (12 mil). The average pore size of the partition wall substrate was 16 $\mu$m, and the porosity was 52%. The PM-trapping layer had a thickness of 20 $\mu$m, a porosity of 70%, and an average pore size was 3 $\mu$m. The thickness of the PM-trapping layer was measured by cutting-observation, and the porosity and the average pore size were measured with a commercially available mercuryporosimeter. The measurement test piece of the PM-trapping layer was subjected to resin filling except for the PM-trapping layer side, and the measurement test piece of the substrate was subjected to resin filling on the PM-trapping layer side. Here, Fig. 16 is a microscope photograph of a cross section of a PM-trapping layer of Example 1.

On the outflow cell side of the partition wall substrate of the honeycomb structure, 100 g/L of a selective reduction type NO$_x$ catalyst was loaded to form a gas purification catalyst layer.

Table 1 shows constitution of the catalyst-carrying filter of Example 1, and Table 2 shows the evaluation results of the aforementioned PM adhesion pressure loss, pressure loss hysteresis, deterioration evaluation on NO$_x$ purification catalyst, compactness (entire length), PM deposition limit amount, and durability. Incidentally, in Example 1, a preventing ammonia slip catalyst (ASC) carrier was separately disposed at the back of the catalyst-carrying filter. It is shown as "catalyst-carrying filter + ASC carrier" in the "constitution of exhaust gas purification system" of Table 1.

Table 1 - (a)

| | | Constitution of exhaust gas purification system | Constitution of filter |
|---|---|---|---|
| Example 1 | | Catalyst-carrying filter + ASC carrier | PM-trapping layer + partition wall substrate + SCR catalyst |
| Example 2 | | Catalyst-carrying filter + ASC carrier | (PM-trapping layer + oxidation catalyst) + partition wall substrate + NO$_x$ adsorber catalyst |
| Example 3 | | Catalyst-carrying filter | PM-trapping layer + partition wall substrate + SCR catalyst + ASC coat (outflow cell side) |
| Example 4 | | Catalyst-carrying filter | PM-trapping layer + partition wall substrate +SCR catalyst + ASC coat (zone) |
| Example 5 | | Catalyst-carrying filter | PM-trapping layer + partition wall substrate + SCR catalyst [PM-trapping layer and partition wall substrate have high porosity] |
| Example 6 | | Catalyst-carrying filter | Adhesion of microparticles in pores of partition wall substrate + SCR catalyst |
| Example 7 | | Catalyst-carrying filter | PM-trapping layer + adhesion of microparticles in pores of partition wall substrate + SCR catalyst |
| Example 8 | | Catalyst-carrying filter | PM-trapping layer + partition wall substrate + SCR catalyst [particle diameter of PM-trapping layer was 0.5 $\mu$m] |
| Example 9 | | Catalyst-carrying filter | PM-trapping layer + partition wall substrate + SCR catalyst [particle diameter of PM-trapping layer was 7 $\mu$m] |
| Comp. Ex. 1 | | Honeycomb filter + SCR carrier | No PM-trapping layer + no SCR catalyst |
| Comp. Ex. 2 | | Catalyst-carrying filter | No PM-trapping layer + SCR catalyst |
| Comp. Ex. 3 | | Honeycomb filter + SCR carrier | PM-trapping layer + no SCR catalyst |

(continued)

| | Constitution of exhaust gas purification system | Constitution of filter |
|---|---|---|
| Comp. Ex. 4 | Catalyst-carrying filter | PM-trapping layer + SCR catalyst (inflow cell side) + partition wall substrate |
| Comp. Ex. 5 | Catalyst-carrying filter | PM-trapping layer + SCR catalyst (inflow cell side / zone) + partition wall substrate |

Table 1 - (b)

| | PM-trapping layer | Adhesion of microparticles in pores of partition wall substrate | Gas purification catalyst layer | Average pore size of partition wall substrate | Average particle diameter of microparticles | Average pore size of PM-trapping layer |
|---|---|---|---|---|---|---|
| | | | | ($\mu$m) | ($\mu$m) | ($\mu$m) |
| Example 1 | Present | None | Present (SCR) | 15 | 2 | 3 |
| Example 2 | Present | None | Present (SCR) | 15 | 2 | 3 |
| Example 3 | Present | None | Present (SCR+ASC) | 15 | 2 | 3 |
| Example 4 | Present | None | Present (SCR+ASC) | 15 | 2 | 3 |
| Example 5 | Present | None | Present (SCR) | 20 | 2 | 3 |
| Example 6 | None | Present | Present (SCR) | 15 | 2 | (3) |
| Example 7 | Present | Present | Present (SCR) | 15 | 2 | 3 |
| Example 8 | Present | None | Present (SCR) | 15 | 0.5 | 1 |
| Example 9 | Present | None | Present (SCR) | 20 | 7 | 9 |
| Comp. Ex. 1 | None | None | None (SCR) | 15 | - | - |
| Comp. Ex. 2 | None | None | Present (SCR) | 15 | - | - |
| Comp. Ex. 3 | Present | None | None (SCR) | 15 | 2 | 3 |
| Comp. Ex. 4 | Present | None | Formed on PM-trapping layer side | 15 | 2 | 3 |
| Comp. Ex. 5 | Present | None | Formed on PM-trapping layer side | 15 | 2 | 3 |

Table 2

| | PM adhesion pressure loss | Pressure loss hysteresis | Deterioration evaluation of NO$_x$ purification catalyst | Compactness | PM deposition limit amount | Durability |
|---|---|---|---|---|---|---|
| | (kPa) | (%) | (0.7 g/kwh) | (mm) | (g/L) | |
| Example 1 | 3.9 | 10 | Good | 381 | 6.5 | Good |
| Example 2 | 3.9 | 10 | Good | 381 | 6.5 | Good |
| Example 3 | 3.8 | 10 | Good | 305 | 6.6 | Good |
| Example 4 | 3.7 | 10 | Good | 305 | 7 | Good |
| Example 5 | 3.5 | 6 | Good | 381 | 6 | Good |
| Example 6 | 3.9 | 10 | Good | 381 | 6.5 | Good |
| Example 7 | 4.0 | 10 | Good | 381 | 6.5 | Good |
| Example 8 | 4.1 | 12 | Good | 381 | 6.5 | Good |
| Example 9 | 3.6 | 7 | Good | 381 | 6.5 | Good |
| Comp. Ex. 1 | 5.3 | 26 | - | 635 | 5 | Bad |
| Comp. Ex. 2 | 5.0 | 50 | - | - | - | Bad |
| Comp. Ex. 3 | 4.6 | - | - | 635 | 5 | - |
| Comp. Ex. 4 | 8.1 | 35 | Bad | - | - | - |
| Comp. Ex. 5 | 7.3 | 35 | Bad | - | - | - |

(Example 2)

There was manufactured a catalyst-carrying filter constituted in the same manner as in Example 1 except that a gas purification catalyst layer was formed by loading the oxidation catalyst on the PM-trapping layer and loading 80 g/L of a NO$_x$ adsorber catalyst on the outflow cell side of the partition wall substrate. Incidentally, the oxidation catalyst was loaded by an aspiration method with preparing oxidation catalyst slurry containing γ-alumina.

(Example 3)

There was manufactured a catalyst-carrying filter constituted in the same manner as Example 1 except that, after a gas purification catalyst layer was formed by loading 80 g/L of a selective reduction type NO$_x$ catalyst on the outflow cell side of the partition wall substrate, a preventing ammonia slip catalyst layer was formed by loading zeolite subjected to ion exchange with platinum (Pt) and palladium (Pd) as a preventing ammonia slip catalyst on the outflow cell side of the partition wall substrate in the same manner.

(Example 4)

There was manufactured a catalyst-carrying filter constituted in the same manner as Example 1 except that a preventing ammonia slip catalyst layer was formed by loading zeolite subjected to ion exchange with platinum (Pt) and palladium (Pd) as a preventing ammonia slip catalyst in the vicinity of the surface on the outflow cell side of the partition wall substrate in the outflow side end portion of a honeycomb structure. Incidentally, the preventing ammonia slip catalyst was formed in a zone (partially formed) in a range from the outflow side end portion to 100 mm of the honeycomb structure.

(Example 5)

There was manufactured a catalyst-carrying filter constituted in the same manner as Example 1 except that the PM-trapping layer had a porosity of 80% and that the substrate had a porosity of 65%.

(Example 6)

There was manufactured a catalyst-carrying filter by allowing cordierite microparticles and silica microparticles for forming a PM-trapping layer, used in Example 1, to adhere and fix to the internal portions of the pores of the honeycomb fired article (partition wall substrate). That is, in the catalyst-carrying filter of Example 6, no PM-trapping layer was formed on the partition wall substrate, and the aforementioned microparticles were allowed to adhere and fix to the internal portions of the pores. In the same manner as in Example 1, on the outflow cell side of the partition wall substrate was formed a gas purification catalyst layer by loading 100 g/L of a selective reduction type $NO_x$ catalyst. Incidentally, the average pore size of the partition wall substrate in the region where the microparticles adhere was 3 $\mu$m. Incidentally, the average pore size in the region where the microparticles adhere is shown with parentheses in the column of the average pore size of the PM-trapping layer.

(Example 7)

There was manufactured a catalyst-carrying filter by allowing cordierite microparticles and silica microparticles for forming a PM-trapping layer, used in Example 1, to adhere and fix to both the internal portions of the pores and the partition wall surfaces of the honeycomb fired article (partition wall substrate). That is, in a catalyst-carrying filter of Example 7, the PM-trapping layer was formed on the partition wall substrate, and the microparticles were allowed to adhere and fix to also the internal portions of the pores. In the same manner as in Example 1, on the outflow cell side of the partition.wall substrate was formed a gas purification catalyst layer by loading 100 g/L of a selective reduction type $NO_x$ catalyst. Incidentally, the average pore size of the PM-trapping layer and the average pore size of the partition wall substrate in the region where the microparticles adhere were 3 $\mu$m.

(Example 8)

There was manufactured a catalyst-carrying filter in the same manner as in Example 1 except that microparticles having an average particle diameter of 0.5 $\mu$m were used as the microparticles (cordierite microparticles and silica microparticles) for forming the PM-trapping layer.

(Example 9)

There was manufactured a catalyst-carrying filter in the same manner as in Example 1 except that microparticles having an average particle diameter of 7 $\mu$m were used as the microparticles (cordierite microparticles and silica microparticles) for forming the PM-trapping layer.

(Comparative Example 1)

A honeycomb filter was manufactured by subjecting the honeycomb structure (partition wall substrate with no PM-trapping layer formed thereon) used in Example 1 to plugging. On this honeycomb filter, neither an oxidation catalyst nor a selective reduction type $NO_x$ catalyst was loaded.

Aside from this honeycomb filter, there was manufactured a substrate for loading a SCR catalyst having a circular columnar shape having a diameter of 266.7 mm and an entire length of 304.8 mm, a partition wall thickness of 150 $\mu$m (6 mil), and a cell density of 62 cells/cm$^2$ (400 cells/inch$^2$), and 150 g/L of a selective reduction type $NO_x$ catalyst was loaded on the substrate for loading the SCR catalyst.

The substrate where the selective reduction type $NO_x$ catalyst was loaded was separately disposed on the downstream side of the aforementioned honeycomb filter to obtain an exhaust gas purification system of Comparative Example 1. Incidentally, in the "Constitution of exhaust gas purification system" of Table 1, it is shown as the "honeycomb filter + SCR carrier.

(Comparative Example 2)

There was manufactured a catalyst-carrying filter in the same manner as in Example 1 except that only a selective reduction type $NO_x$ catalyst was loaded on a honeycomb structure without forming the PM-trapping layer in the catalyst-carrying filter of Example 1.

(Comparative Example 3)

There was manufactured a honeycomb filter in the same manner as in Example 1 except that no selective reduction type $NO_x$ catalyst was loaded on the outflow side of the partition wall substrate in the catalyst-carrying filter of Example 1. That is, this honeycomb filter has no $NO_x$ purification performance. Then, a substrate constituted in the same manner as the substitute where a selective reduction type $NO_x$ catalyst was loaded of the Comparative Example 1 was manufactured, and the substrate where a selective reduction type $NO_x$ catalyst was loaded was disposed on the downstream side of the aforementioned honeycomb filter to obtain an exhaust gas purification system of Comparative Example 1.

Also for the aforementioned Examples 2 to 9 and Comparative Examples 1 to 3, and the evaluation results of the aforementioned PM adhesion pressure loss, pressure loss hysteresis, deterioration evaluation on $NO_x$ purification catalyst, compactness (entire length), PM deposition limit amount, and durability are shown in Table 2. Incidentally, regarding Comparative Example 1 to 3, some of the evaluations were not performed.

(Comparative Example 4)

There was manufactured a catalyst-carrying filter constituted in the same manner as in Examples 1 except that the selective reduction type $NO_x$ catalyst loaded on the outflow cell side of the partition wall substrate in a catalyst-carrying filter of Example 1 was loaded on the inflow cell side of the PM-trapping layer and the partition wall substrate. That is, in Comparative Example 4, the exhaust gas purification catalyst layer was formed on the PM-trapping layer side.

(Comparative Example 5)

There was manufactured a catalyst-carrying filter constituted in the same manner as in Example 1 except that the selective reduction type $NO_x$ catalyst loaded on the outflow cell side of the partition wall substrate in a catalyst-carrying filter of Example 1 was loaded on the outflow side end portion of the partition wall substrate (i.e., honeycomb structure) on the inflow cell side of the partition wall substrate and the PM-trapping layer. That is, in Comparative Example 5, the exhaust gas purification catalyst layer was formed partially in the outflow side end portion of the partition wall substrate on the PM-trapping layer side. In the aforementioned Comparative Examples 4 and 5, the evaluations for the aforementioned PM adhesion pressure loss, pressure loss hysteresis, and deterioration evaluation on $NO_x$ purification catalyst were performed. The evaluation results are shown in Table 2.

(Results)

The catalyst-carrying filters of Examples 1 to 9 each had inhibited pressure loss rise and very low pressure loss hysteresis. On the other hand, Comparative Examples 1 to 3 each had large pressure loss rise in comparison with Examples. In addition, in Comparative Examples 1, 2, 4 and 5, the pressure loss hysteresis was extremely large. Here, evaluation cases of pressure loss hysteresis will be described more specifically by the use of Examples 15A and 15B. Fig. 15A is a graph showing an example of the evaluation result of the pressure loss hysteresis of a catalyst-carrying filter having the same constitution as that of Example 1. Fig. 15B is a graph showing another example of an evaluation result of the pressure loss hysteresis of a catalyst carrying filter having the same constitution as that of Comparative Example 2. In addition, in Figs. 15A and 15B, the horizontal axis shows the PM deposition amount (g/L), and the vertical axis shows the amount of pressure loss change $\Delta P$(kPa).

Figs. 15A and 15B shows the results of measurement of the degree (amount of change $\Delta P$) of pressure loss rise according to the PM deposition amount at the time that the regeneration time was changed with a diesel engine in order to perform evaluation for pressure loss hysteresis. In the measurement, four kinds of data of initial stage (before regeneration), 3 minute regeneration, 5 minute regeneration, and 10 minute regeneration are compared with each other. In Fig. 15A, which shows the measurement results of a catalyst-carrying filter of the present invention (Example), even in the case of partial regeneration (3 minute, 5 minute, or 10 minute regeneration), the relation between the PM deposition amount (2 g/L or more) and the pressure loss was the same. On the other hand, in Fig. 15B, which shows the measurement results of a catalyst-carrying filter corresponding to Comparative Example, in each regeneration, the relation between the PM deposition amount (2 g/L or more) and the pressure loss was different.

In addition, in the catalyst-carrying filters of Examples 1 to 9, even if exhaust gas containing a large amount of ash, the ash is trapped by the PM-trapping layer and does not reach the gas purification catalyst layer. Therefore, deterioration of the $NO_x$ purification catalyst was inhibited to satisfy the JP09 regulation. On the other hand, in Comparative Examples 4 and 5, because of the constitution where ash contacted the $NO_x$ purification catalyst, the deterioration of the $NO_x$ purification catalyst proceeded, and JP09 regulation was not satisfied.

In addition, the catalyst-carrying filters of Examples 1 to 9 were very compact because both the PM trapping and the $NO_x$ purification could be performed with one filter. In Comparative Examples 1 and 3, the filter for PM trapping and the carrier for $NO_x$ purification were separately disposed, and therefore the entire length of the exhaust gas purification system was about twice the length of those of Examples.

Further, in catalyst-carrying filters of Examples 1 to 9, it was found out that the PM deposition limit amount is large in comparison with those of the Comparative Examples 1 and 3 to be able to lengthen the interval between filter regenerations. This seems to be because, since a large amount of catalyst is loaded ) on the substrate of each of the catalyst-carrying filters of Examples 1 to 9 in comparison with those of Comparative Examples 1 to 3, the thermal capacity was increased for the amount of the catalyst to inhibit the temperature rise during regeneration.

A catalyst-carrying filter of the present invention can suitably be used for trapping or purifying particulates contained in exhaust gas discharged from an internal combustion engine including a diesel engine, an engine for ordinary vehicles, an engine for large-size automobiles such as trucks and buses and various burning apparatuses.

**Claims**

1. A catalyst-carrying filter comprising:

   (a) a honeycomb structure (2) having porous partition walls (4) having a large number of pores and separating and forming a plurality of cells (3) functioning as exhaust gas flow passages, and
   (b) plugging portions (13) for alternately plugging open end portions (3X) on an exhaust gas inflow side and open end portions (3Y) of an exhaust gas outflow side of the cells;
   (c) wherein the cells are constituted of inflow cells (3a) having open end portions on the inflow side and outflow cells (3b) having open end portions on the outflow side,
   (d) wherein one of the following (d1) and (d2) applies:

   (d1) the partition walls are constituted of a porous partition wall substrate (4a) having a large number of pores, and microparticles (21) adhered and fixed to the internal portions of the pores in the range of predetermined partition wall thickness from the inflow cell side surface, the average pore size in the region where the microparticles (21) adhere and fix to the internal portions of the pores of the partition wall substrate is smaller than an average pore size of the partition wall substrate (4a), and the thickness of the region where the microparticles (21) adhere and fix to the internal portions of the pores of the partition wall substrate is 3/500 to 1/2 of the thickness of the portion of the partition wall substrate separating the cells,
   (d2) the partition walls are constituted of a porous partition wall substrate (4a) having a large number of pores, a PM-trapping layer (20a) of microparticles (20) deposited and fixed on an inflow cell side surface of the partition wall substrate on a side of separating and forming the inflow cells (3a), and microparticles (21) adhered and fixed to the internal portions of the pores in the range of predetermined partition wall thickness from the inflow cell side surface, the average pore size of the PM-trapping layer (20a) and the average pore size in the region where the microparticles (21) adhere and fix to the internal portions of the pores of the partition wall substrate are smaller than the average pore size of the partition wall substrate (4a), the thickness of the PM-trapping layer (20a) is 3/500 to 1/2 times the thickness of the portion of the partition wall substrate (4a) separating the cells, and the thickness of the region where the microparticles (21) adhere and fix to the internal portions of the pores of the partition wall substrate is 3/500 to 1/2 of the thickness of the portion of the partition wall substrate separating the cells, and

   (e) a gas purification catalyst layer (23) where a catalyst purifying at least $NO_x$ is loaded on at least one of an outflow cell side surface of the partition wall substrate on a side of separating and forming the outflow cells (3b) and internal portions of the pores in the range of predetermined partition wall thickness from the outflow cell side surface.

**2.** A catalyst-carrying filter according to Claim 1, wherein in (d1) the average particle diameter of the microparticles (21) adhering and fixing to the internal portions of the pores of the partition wall substrate is smaller than the average pore size of the partition wall substrate (4a), and in (d2) the average particle diameter of the microparticles (20) constituting the PM-trapping layer and the average particle diameter of the microparticles (21) adhering and fixing to the internal portions of the pores of the partition wall substrate are smaller than the average pore size of the partition wall substrate (4a).

**3.** A catalyst-carrying filter according to Claim 1 or 2, wherein in (d1) the average particle diameter of the microparticles (21) adhering and fixing to the internal portions of the pores of the partition wall substrate is 0.1 to 50 $\mu$m, and in (d2) the average particle diameter of the microparticles (20) constituting the PM-trapping layer and the average particle diameter of the microparticles (21) adhering and fixing to the internal portions of the pores of the partition wall substrate are 0.1 to 50 $\mu$m.

**4.** A catalyst-carrying filter according to any one of Claims 1 to 3, wherein the catalyst for purifying No$_x$ is at least one kind selected from the group consisting of a selective reduction type No$_x$ catalyst, a NOx adsorber catalyst, a three-way catalyst, a four-way catalyst, and a multi-way catalyst of five ways or more.

**5.** A catalyst-carrying filter according to any one of Claims 1 to 4, wherein a carrying amount of the catalyst for purifying NO$_x$ is 35 g/L or more.

**6.** A catalyst-carrying filter according to any one of Claims 1 to 5, wherein an oxidation catalyst is loaded on at least one of the surface of the partition wall substrate (4a) and the internal portions of the pores of the partition wall substrate (4a).

**7.** A catalyst-carrying filter according to any one of Claims 1 to 6, wherein in (d2) an oxidation catalyst is loaded on at least one of the surface of the PM-trapping layer (20a) and the internal portions of the pores of the PM-trapping layer (20a).

**8.** A catalyst-carrying filter according to any one of Claims 1 to 7, wherein a preventing ammonia slip catalyst layer having a preventing ammonia slip catalyst loaded thereon is loaded on at least one of the outflow cell side surface of the partition wall substrate (4a) and the internal portions of the pores in the range of the predetermined partition wall thickness from the outflow cell side surface.

**9.** A catalyst-carrying filter according to Claim 8, wherein the preventing ammonia slip catalyst layer is partially formed in the region on the outflow end face side of the honeycomb structure.

**10.** A catalyst-carrying filter according to any one of Claims 1 to 9, wherein in (d1)the range where the microparticles (21) adhere and fix to the internal portions of the pores of the partition wall substrate is 1 to 30 $\mu$m, and in (d2) the average pore size in the PM-trapping layer (20a) and the range where the microparticles (21) adhere and fix to the internal portions of the pores of the partition wall substrate is 1 to 30 $\mu$m.

**11.** A catalyst-carrying filter according to any one of Claims 1 to 10, wherein the PM-trapping filter has a mesh structure.

**12.** A catalyst-carrying filter according to any one of Claims 1 to 11, wherein the partition wall substrate (4a) is constituted of a ceramic material.

**13.** A catalyst-carrying filter according to any one of Claims 1 to 12, wherein in (d1) the microparticles (21) adhering and fixing to the internal portions of the pores of the partition wall substrate are constituted of the same material as that constituting the partition wall substrate (4a), and in (d2) the microparticles constituting the PM-trapping layer (20a) and the microparticles (21) adhering and fixing to the internal portions of the pores of the partition wall substrate are constituted of the same material as that constituting the partition wall substrate (4a).

**14.** A catalyst-carrying filter according to any one of claims 1 to 13 wherein in (d1) and (d2) the thickness of the region where the microparticles (21) adhere and fix to the internal portions of the pores of the partition wall substrate is 1/125 to 1/5 of the thickness of the portion of the partition wall substrate separating the cells.

**15.** A catalyst-carrying filter according to claim 14 wherein in (d1) and (d2) the thickness of the region where the microparticles (21) adhere and fix to the internal portions of the pores of the partition wall substrate is 1/100 to 1/10 of the thickness of the portion of the partition wall substrate separating the cells.

16. A diesel engine having an exhaust gas purification system comprising:

an exhaust gas flow passage (51) where exhaust gas discharged from the diesel engine circulates,
a catalyst-carrying filter (1) according to any one of Claims 1 to 15, disposed in the exhaust gas flow passage (51), and
a reducing agent supply portion (52) disposed in the exhaust gas flow passage (51) on the upstream side of the catalyst-carrying filter (1) and supplying a urea aqueous solution or an ammonia aqueous solution by spraying into the exhaust gas.

**Patentansprüche**

1. Katalysatorträgerfilter, umfassend:

(a) eine Wabenstruktur (2) mit porösen Trennwänden (4), die eine große Anzahl an Poren aufweisen und eine Vielzahl an Zellen (3) trennen und ausbilden, die als Abgasstromdurchlässe wirken, und
(b) Verschlussabschnitte (13) zum alternierenden Verschließen von offenen End-Abschnitten (3X) auf einer Abgaseinströmseite und offenen End-Abschnitten (3Y) einer Abgasausströmseite der Zellen;
(c) worin sich die Zellen aus Einströmzellen (3b) mit offenen End-Abschnitten auf der Einströmseite und Ausströmzellen (3b) mit offenen End-Abschnitten auf der Ausströmseite zusammensetzen,
(d) worin eines von Folgendem, (d1) und (d2), zutrifft:

(d1) die Trennwände setzen sich aus einem porösen Trennwandsubstrat (4a), das eine große Anzahl an Poren aufweist, und Mikropartikeln (21) zusammen, die an den inneren Abschnitten der Poren im Ausmaß einer vorbestimmten Trennwanddicke von der Einströmzellenseitenoberfläche haften und sich daran festgesetzt haben, wobei die durchschnittliche Porengröße im Bereich, in dem die Mikropartikel (21) an den inneren Abschnitten der Poren des Trennwandsubstrats haften und sich daran festsetzen, kleiner als eine durchschnittliche Porengröße des Trennwandsubstrats (4a) ist, und die Dicke des Bereichs, in dem die Mikropartikel (21) an den inneren Abschnitten der Poren des Trennwandsubstrats haften und sich daran festsetzen, 3/500 bis ½ der Dicke des Abschnitts des Trennwandsubstrats ist, das die Zellen trennt,
(d2) die Trennwände setzen sich aus einem porösen Trennwandsubstrat (4a), das eine große Anzahl an Poren aufweist, einer PM-Einfangschicht (20a) von Mikropartikeln (20), die auf einer Einströmseitenoberfläche des Trennwandsubstrats auf einer Seite des Trennens und Ausbildens der Einströmzellen (3a) abgelagert sind und sich darauf festgesetzt haben, und Mikropartikeln (21) zusammen, die an den inneren Abschnitten der Poren im Bereich einer vorbestimmten Trennwanddicke von der Einströmzellenseitenoberfläche haften und sich daran festgesetzt haben, wobei die durchschnittliche Porengröße der PM-Einfangschicht (20a) und die durchschnittliche Porengröße in dem Bereich, in dem die Mikropartikel (21) an den inneren Abschnitten der Poren des Trennwandsubstrats haften und sich daran festsetzen, kleiner als die durchschnittliche Porengröße des Trennwandsubstrats (4a) sind, und die Dicke der PM-Einfangschicht (20a) 3/500 bis ½ Mal der Dicke des Abschnitts des Trennwandsubstrats (4a) ist, das die Zellen trennt, und die Dicke des Bereichs, in dem die Mikropartikel (21) an den inneren Abschnitten der Poren des Trennwandsubstrats haften und sich daran festsetzen, 3/500 bis ½ der Dicke des Abschnitts des Trennwandsubstrats ist, das die Zellen trennt, und

(e) eine Gasreinigungskatalysatorschicht (23), in der ein Katalysator, der zumindest $NO_x$ reinigt, auf mindestens einer Ausströmzellenseitenoberfläche des Trennwandsubstrats auf einer Seite des Trennens und Ausbildens der Ausströmzellen (3b) und der inneren Abschnitte der Poren im Ausmaß einer vorbestimmten Trennwanddicke von der Ausströmzellenseitenoberfläche aufgeladen ist.

2. Katalysatorträgerfilter gemäß Anspruch 1, worin in (d1) der durchschnittliche Partikeldurchmesser der Mikropartikel (21), die an den inneren Abschnitten der Poren des Trennwandsubstrats haften und sich daran festsetzen, kleiner als die durchschnittliche Porengröße des Trennwandsubstrats (4a) ist, und in (d2) der durchschnittliche Partikeldurchmesser der Mikropartikel (20), welche die PM-Einfangschicht bilden, und der durchschnittliche Partikeldurchmesser der Mikropartikel (21), die an den inneren Abschnitten der Poren des Trennwandsubstrats haften und sich daran festsetzen, kleiner als die durchschnittliche Porengröße des Trennwandsubstrats (4a) sind.

3. Katalysatorträgerfilter gemäß Anspruch 1 oder 2, worin in (d1) der durchschnittliche Partikeldurchmesser der Mikropartikel (21), die an den inneren Abschnitten der Poren des Trennwandsubstrats haften und sich daran festsetzen, 0,1 bis 50 $\mu$m ist, und in (d2) der durchschnittliche Partikeldurchmesser der Mikropartikel (20), welche die PM-Einfangschicht bilden, und der durchschnittliche Partikeldurchmesser der Mikropartikel (21), die an den inneren Abschnitten der Poren des Trennwandsubstrats haften und sich daran festsetzen, 0,1 bis 50 $\mu$m sind.

4. Katalysatorträgerfilter gemäß einem der Ansprüche 1 bis 3, worin der Katalysator zur Reinigung von $NO_x$ mindestens eine Art aus der Gruppe, die aus einem selektiven Reduktionstyp-$NO_x$-Katalysator, einem $NO_x$-Adsorberkatalysator, einem Dreiwegekatalysator, einem Vierwegekatalysator und einem Mehrwegkatalysator von fünf Wegen oder mehr besteht, ist.

5. Katalysatorträgerfilter gemäß einem der Ansprüche 1 bis 4, worin ein tragender Anteil des Katalysators für das Reinigen von $NO_x$ 35 g/L oder mehr ist.

6. Katalysatorträgerfilter gemäß einem der Ansprüche 1 bis 5, worin ein Oxidationskatalysator auf mindestens einer Oberfläche des Trennwandsubstrats (4a) oder den inneren Abschnitte der Poren des Trennwandsubstrats (4a) aufgeladen ist.

7. Katalysatorträgerfilter gemäß einem der Ansprüche 1 bis 6, worin in (d2) ein Oxidationskatalysator auf mindestens einer Oberfläche der PM-Einfangschicht (20a) oder den inneren Abschnitten der Poren der PM-Einfangschicht (20a) aufgeladen ist.

8. Katalysatorträgerfilter gemäß einem der Ansprüche 1 bis 7, worin eine Ammoniakschlupf-verhindernde Katalysatorschicht, die einen darauf aufgeladenen Ammoniakschlupf-verhindernden Katalysator aufweist, auf mindestens der Ausströmzellenseitenoberfläche des Trennwandsubstrats (4a) oder den inneren Abschnitten der Poren im Bereich der vorbestimmten Trennwanddicke von der Ausströmzellenseitenoberfläche aufgeladen ist.

9. Katalysatorträgerfilter gemäß Anspruch 8, worin die Ammoniakschlupf-verhindernde Katalysatorschicht teilweise im Bereich der Ausström-Endflächenseite der Wabenstruktur ausgebildet ist.

10. Katalysatorträgerfilter gemäß einem der Ansprüche 1 bis 9, worin in (d1) der Bereich, in dem die Mikropartikel (21) an den inneren Abschnitten der Poren des Trennwandsubstrats haften und sich daran festsetzen, 1 bis 30 $\mu$m ist, und in (d2) die durchschnittliche Porengröße in der PM-Einfangschicht (20a) und der Bereich, in dem die Mikropartikel (21) an den inneren Abschnitten der Poren des Trennwandsubstrats haften und sich daran festsetzen, 1 bis 30 $\mu$m sind.

11. Katalysatorträgerfilter gemäß einem der Ansprüche 1 bis 10, worin der PM-Einfangfilter eine Maschenstruktur aufweist.

12. Katalysatorträgerfilter gemäß einem der Ansprüche 1 bis 11, worin das Trennwandsubstrat (4a) aus einem keramischen Material gebildet ist.

13. Katalysatorträgerfilter gemäß einem der Ansprüche 1 bis 12, worin in (d1) die Mikropartikel (21), die an den inneren Abschnitten der Poren des Trennwandsubstrats haften und sich daran festsetzen, aus demselben Material wie demjenigen sind, welches das Trennwandsubstrat (4a) bildet, und in (d2) die Mikropartikel, welche die PM-Einfangschicht (20a) bilden, und die Mikropartikel (21), die an den inneren Abschnitten der Poren des Trennwandsubstrats haften und sich daran festsetzen, aus demselben Material wie demjenigen sind, welches das Trennwandsubstrat (4a) bildet.

14. Katalysatorträgerfilter gemäß einem der Ansprüche 1 bis 13, worin in (d1) und (d2) die Dicke des Bereichs, in dem die Mikropartikel (21) an den inneren Abschnitten der Poren des Trennwandsubstrats haften und sich daran festsetzen, 1/125 bis 1/5 der Dicke des Abschnitts des Trennwandsubstrats ist, das die Zellen trennt.

15. Katalysatorträgerfilter gemäß Anspruch 14, worin in (d1) und (d2) die Dicke des Bereichs, in dem die Mikropartikel (21) an den inneren Abschnitten der Poren des Trennwandsubstrats haften und sich daran festsetzen, 1/100 bis 1/10 der Dicke des Abschnitts des Trennwandsubstrats ist, das die Zellen trennt.

16. Dieselmotor mit einem Abgasreinigungssystem, umfassend:

einen Abgasstromdurchlass (51), in dem das aus dem Dieselmotor ausgestoßene Abgas zirkuliert,

einen Katalysatorträgerfilter (1) gemäß einem der Ansprüche 1 bis 15, der im Abgasstromdurchlass (51) angeordnet ist, und

einen Reduktionsmittelzufuhrabschnitt (52), der im Abgasstromdurchlass (51) auf der Stromaufwärts-Seite des Katalysatorträgerfilters (1) angeordnet ist, und eine wässrige Harnstofflösung oder eine wässrige Ammoniaklösung durch Einsprühen in das Abgas zuführt.

**Revendications**

1. Filtre supportant un catalyseur comprenant :

   (a) une structure en nid d'abeilles (2) comportant des parois de séparation poreuses (4) comportant un grand nombre de pores et séparant et formant une pluralité de cellules (3) agissant en tant que passages d'écoulement de gaz d'échappement, et

   (b) des parties d'obturation (13) pour obturer alternativement des parties d'extrémité ouvertes (3X) d'un côté d'écoulement d'entrée de gaz d'échappement et des parties d'extrémité ouvertes (3Y) d'un côté d'écoulement de sortie de gaz d'échappement des cellules ;

   (c) dans lequel les cellules sont constituées de cellules d'écoulement d'entrée (3a) ayant des parties d'extrémité ouvertes du côté d'écoulement d'entrée et de cellules d'écoulement de sortie (3b) ayant des parties d'extrémité ouvertes du côté d'écoulement de sortie,

   (d) dans lequel l'un des points (d1) et (d2) qui suivent s'applique :

      (d1) les parois de séparation sont constituées d'un substrat de paroi de séparation poreux (4a) comportant un grand nombre de pores, et de microparticules (21) qui ont adhéré et qui sont fixées aux parties internes des pores dans la plage d'épaisseur de paroi de séparation prédéterminée à partir de la surface latérale de cellule d'écoulement d'entrée, la taille de pore moyenne dans la région dans laquelle les microparticules (21) adhèrent et se fixent aux parties internes des pores du substrat de paroi de séparation est inférieure à une taille de pore moyenne du substrat de paroi de séparation (4a), et l'épaisseur de la région dans laquelle les microparticules (21) adhèrent et se fixent aux parties internes des pores du substrat de paroi de séparation est égale à 3/500 à 1/2 fois l'épaisseur de la partie du substrat de paroi de séparation séparant les cellules,

      (d2) les parois de séparation sont constituées d'un substrat de paroi de séparation poreux (4a) comportant un grand nombre de pores, d'une couche de piégeage de matière particulaire (20a) de microparticules (20) déposées et fixées sur une surface latérale de cellule d'écoulement d'entrée du substrat de paroi de séparation d'un côté de séparation et de formation des cellules d'écoulement d'entrée (3a), et de microparticules (21) qui ont adhéré et qui sont fixées aux parties internes des pores dans la plage d'épaisseur de paroi de séparation prédéterminée à partir de la surface latérale de cellule d'écoulement d'entrée, la taille de pore moyenne de la couche de piégeage de matière particulaire (20a) et la taille de pore moyenne dans la région dans laquelle les microparticules (21) adhèrent et se fixent aux parties internes des pores du substrat de paroi de séparation sont inférieures à la taille de pore moyenne du substrat de paroi de séparation (4a), l'épaisseur de la couche de piégeage de matière particulaire (20a) est égale à 3/500 à 1/2 fois l'épaisseur de la partie du substrat de paroi de séparation (4a) séparant les cellules, et l'épaisseur de la région dans laquelle les microparticules (21) adhèrent et se fixent aux parties internes des pores du substrat de paroi de séparation est égale à 3/500 à 1/2 fois l'épaisseur de la partie du substrat de paroi de séparation séparant les cellules, et

   (e) une couche de catalyseur de purification de gaz (23), où un catalyseur purifiant au moins le $NO_x$ est chargé sur au moins l'une d'une surface latérale de cellule d'écoulement de sortie du substrat de paroi de séparation d'un côté de séparation et de formation des cellules d'écoulement de sortie (3b) et des parties internes des pores dans la plage d'épaisseur de paroi de séparation prédéterminée à partir de la surface latérale de cellule d'écoulement de sortie.

2. Filtre supportant un catalyseur selon la revendication 1, dans lequel, en (d1), le diamètre de particule moyen des microparticules (21) adhérant et se fixant aux parties internes des pores du substrat de paroi de séparation est inférieur à la taille de pore moyenne du substrat de paroi de séparation (4a) et, en (d2), le diamètre de particule moyen des microparticules (20) constituant la couche de piégeage de matière particulaire et le diamètre de particule moyen des microparticules (21) adhérant et se fixant aux parties internes des pores du substrat de paroi de séparation sont inférieures à la taille de pore moyenne du substrat de paroi de séparation (4a).

3. Filtre supportant un catalyseur selon la revendication 1 ou 2, dans lequel, en (d1), le diamètre de particule moyen des microparticules (21) adhérant et se fixant aux parties internes des pores du substrat de paroi de séparation est de 0,1 à 50 $\mu$m, et, en (d2), le diamètre de particule moyen des microparticules (20) constituant la couche de piégeage de matière particulaire et le diamètre de particule moyen des microparticules (21) adhérant et se fixant aux parties internes des pores du substrat de paroi de séparation sont de 0,1 à 50 $\mu$m.

4. Filtre supportant un catalyseur selon l'une quelconque des revendications 1 à 3, dans lequel le catalyseur pour purifier le $NO_x$ est au moins d'un type sélectionné dans le groupe consistant en un catalyseur de $NO_x$ de type à réduction sélective, un catalyseur adsorbant le $NO_x$, un catalyseur trifonctionnel, un catalyseur quadrifonctionnel, et un catalyseur multifonctionnel à cinq fonctions ou plus.

5. Filtre supportant un catalyseur selon l'une quelconque des revendications 1 à 4, dans lequel une quantité supportée du catalyseur pour purifier le $NO_x$ est de 35 g/L ou plus.

6. Filtre supportant un catalyseur selon l'une quelconque des revendications 1 à 5, dans lequel un catalyseur d'oxydation est chargé sur au moins l'une de la surface du substrat de paroi de séparation (4a) et des parties internes des pores du substrat de paroi de séparation (4a).

7. Filtre supportant un catalyseur selon l'une quelconque des revendications 1 à 6, dans lequel, en (d2), un catalyseur d'oxydation est chargé sur au moins l'une de la surface de la couche de piégeage de matière particulaire (20a) et des parties internes des pores de la couche de piégeage de matière particulaire (20a).

8. Filtre supportant un catalyseur selon l'une quelconque des revendications 1 à 7, dans lequel une couche de catalyseur empêchant un rejet d'ammoniac, sur laquelle un catalyseur empêchant un rejet d'ammoniac est chargé, est chargée sur au moins l'une de la surface latérale de cellule d'écoulement de sortie du substrat de paroi de séparation (4a) et des parties internes des pores dans la plage de l'épaisseur de paroi de séparation prédéterminée à partir de la surface latérale de cellule d'écoulement de sortie.

9. Filtre supportant un catalyseur selon la revendication 8, dans lequel la couche de catalyseur empêchant un rejet d'ammoniac est partiellement formée dans la région d'un côté de face d'extrémité d'écoulement de sortie de la structure en nid d'abeilles.

10. Filtre supportant un catalyseur selon l'une quelconque des revendications 1 à 9, dans lequel, en (d1), la plage dans laquelle les microparticules (21) adhèrent et se fixent aux parties internes des pores du substrat de paroi de séparation est de 1 à 30 $\mu$m, et, en (d2), la taille de pore moyenne dans la couche de piégeage de matière particulaire (20a) et la plage dans laquelle les microparticules (21) adhèrent et se fixent aux parties internes des pores du substrat de paroi de séparation sont de 1 à 30 $\mu$m.

11. Filtre supportant un catalyseur selon l'une quelconque des revendications 1 à 10, dans lequel le filtre de piégeage de matière particulaire a une structure maillée.

12. Filtre supportant un catalyseur selon l'une quelconque des revendications 1 à 11, dans lequel le substrat de paroi de séparation (4a) est constitué d'une céramique.

13. Filtre supportant un catalyseur selon l'une quelconque des revendications 1 à 12, dans lequel, en (d1), les microparticules (21) adhérant et se fixant aux parties internes des pores du substrat de paroi de séparation sont constituées du même matériau que celui constituant le substrat de paroi de séparation (4a), et, en (d2), les microparticules constituant la couche de piégeage de matière particulaire (20a) et les microparticules (21) adhérant et se fixant aux parties internes des pores du substrat de paroi de séparation sont constituées du même matériau que celui constituant le substrat de paroi de séparation (4a).

14. Filtre supportant un catalyseur selon l'une quelconque des revendications 1 à 13, dans lequel, en (d1) et en (d2), l'épaisseur de la région dans laquelle les microparticules (21) adhèrent et se fixent aux parties internes des pores du substrat de paroi de séparation est égale à 1/125 à 1/5 fois l'épaisseur de la partie du substrat de paroi de séparation séparant les cellules.

**15.** Filtre supportant un catalyseur selon la revendication 14, dans lequel, en (d1) et en (d2), l'épaisseur de la région dans laquelle les microparticules (21) adhèrent et se fixent aux parties internes des pores du substrat de paroi de séparation est égale à 1/100 à 1/10 fois l'épaisseur de la partie du substrat de paroi de séparation séparant les cellules.

**16.** Moteur diesel comportant un système de purification de gaz d'échappement comprenant :

un passage d'écoulement de gaz d'échappement (51) dans lequel un gaz d'échappement déchargé du moteur diesel s'écoule,
un filtre supportant un catalyseur (1) selon l'une quelconque des revendications 1 à 15, disposé dans le passage d'écoulement de gaz d'échappement (51), et
une partie de fourniture d'agent de réduction (52) disposée dans le passage d'écoulement de gaz d'échappement (51) du côté amont du filtre supportant un catalyseur (1) et fournissant une solution aqueuse d'urée ou une solution aqueuse d'ammoniac par pulvérisation dans le gaz d'échappement.

FIG.1

FIG.2

FIG.3

FIG.4

FIG.5A

FIG.5B

## FIG.6A

## FIG.6B

FIG.7

FIG.8

FIG.9

FIG.10

1C

25

G1    G1    G1    G1

3a

25

20a

20

4

5

4a

23(22)

G2    G2    G2

3b

EP 2 324 904 B1

FIG.11

EP 2 324 904 B1

FIG.12

2A

FIG.13

FIG.14

PM
PRESSURE
LOSS (kPa)

PRESSURE
LOSS
HYSTERESIS

0g/L                                    3g/L

PM AMOUNT (g/L)

FIG.15A

WITH PM-TRAPPING LAYER + NOx CATALYST

10-MINUTE REGENERATION
ARTICLE

6

INITIAL STAGE
(BEFORE
REGENERATION)

△P(kPa)

3-MINUTE REGENERATION ARTICLE

5-MINUTE REGENERATION ARTICLE

5

PM DEPOSITION AMOUNT (g/L)

## FIG.15B

WITHOUT PM-TRAPPING LAYER + NOx CATALYST

INITIAL STAGE (BEFORE REGENERATION)

10-MINUTE REGENERATION ARTICLE

5-MINUTE REGENERATION ARTICLE

3-MINUTE REGENERATION ARTICLE

△P(kPa)

PM DEPOSITION AMOUNT (g/L)

## FIG.16

PM-TRAPPING LAYER (THICKNESS:20μm, PARTICLE DIAMETER:2μm)

PARTITION WALL SUBSTRATE

20 μ m

FIG.17                                                                                      **110**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006255539 A
- JP 2005248726 A
- JP 2008188511 A
- EP 1398081 A
- EP 1961933 A

- JP 2008279334 A
- JP 2004270565 A
- JP 3051142 B
- JP 63100919 A
- JP 1135541 A